Europäisches Patentamt

(19) European Patent Office

Office européen des brevets

(11) Publication number: **0 088 130**
**B1**

(12) **EUROPEAN PATENT SPECIFICATION**

(45) Date of publication of patent specification: **20.07.88**

(21) Application number: **82902546.9**

(22) Date of filing: **26.08.82**

(86) International application number:
**PCT/JP82/00341**

(87) International publication number:
**WO 83/00902 17.03.83 Gazette 83/07**

(51) Int. Cl.⁴: **F 02 P 5/04**

(54) **IGNITION DEVICE FOR INTERNAL COMBUSTION ENGINE.**

(30) Priority: **28.08.81 JP 136460/81**
**16.09.81 JP 147529/81**
**16.09.81 JP 147536/81**

(43) Date of publication of application:
**14.09.83 Bulletin 83/37**

(45) Publication of the grant of the patent:
**20.07.88 Bulletin 88/29**

(84) Designated Contracting States:
**DE FR GB**

(56) References cited:
**JP-A-49 127 036**
**JP-A-52 043 036**
**JP-A-52 047 146**
**JP-A-52 085 645**
**US-A-3 867 916**
**US-A-4 208 992**

(73) Proprietor: **MITSUBISHI DENKI KABUSHIKI KAISHA**
**2-3, Marunouchi 2-chome Chiyoda-ku Tokyo 100 (JP)**

(72) Inventor: **OOKAWA, Kiyoshi**
**Mitsubishi Denki K.K. Himeji Seisakusho**
**840, Chiyodacho Himeji-shi Hyogo 670 (JP)**

(74) Representative: **Lawson, David Glynne et al MARKS & CLERK 57-60 Lincoln's Inn Fields London WC2A 3LS (GB)**

EP 0 088 130 B1

Courier Press, Leamington Spa, England.

# 0 088 130

**Description**

This invention relates to ignition apparatus for internal combustion engines, and in particular, ignition apparatus based on semiconductors, for determining ignition advance electronically.

US—A—4201163 (JP—A—52 85645) discloses an electconic ignition control apparatus comprising means for detecting first and second angular reference positions of the engine which correspond respectively to the minimum and maximum ignition advance angles, a capacitor, first circuit means for charging the capacitor at a first predetermined rate during a first period and discharging it at a second predetermined rate during a second period, means for comparing the voltage on the capacitor with a reference voltage and for generating an ignition timing signal when the capacitor voltage reaches this reference voltage during the said second period, circuit means for rapidly discharging the capacitor at a third rate much higher than the second rate, and a semiconductor switch for exciting the engine ignition coil when actuated by an ignition timing signal controlled by the charged state of the capacitor.

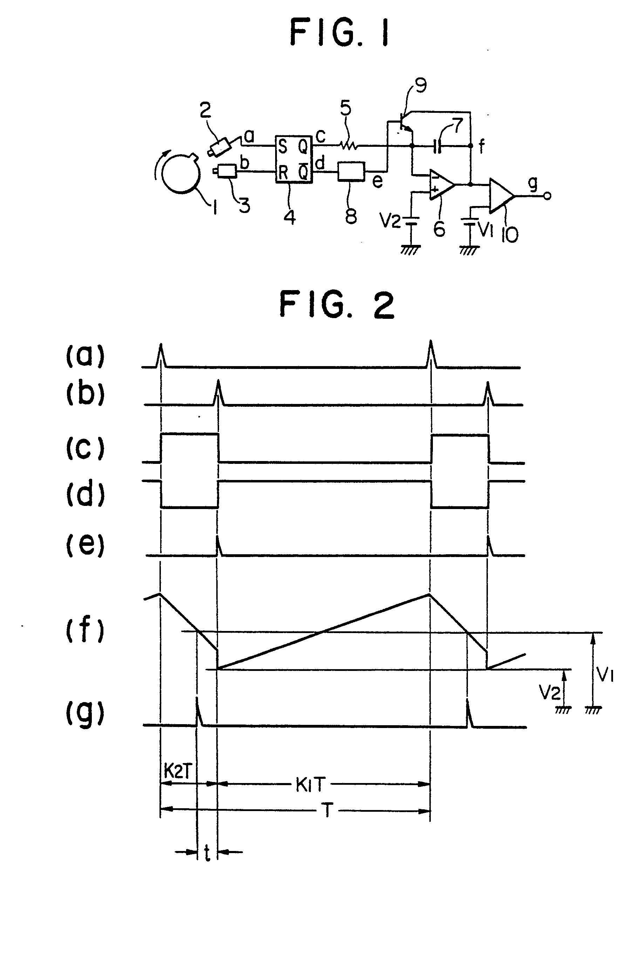

In the accompanying drawings, Fig. 1 is a circuit diagram illustrating a conventional ignition apparatus of the type referred to. In this Fig. 1 is a magnetic rotor rotated in synchronism with an engine and including a protrusion of one portion thereof, 2 a pulser composed of a magneto generator for detecting an ignition position of a maximum angular advance and also 3 is a similar pulser for detecting an ignition position of a minimum angular advance.

A signal from the pulser 2 is arranged to be applied, as a setting signal, to a setting input S of RS FLIP-FLOP circuit 4 (which is called hereinafter an FF) and a signal from the pulser 3 is arranged to be applied, as a resetting signal, to a resetting input end R of the FF 4.

An output end Q of this FF 4 is connected to an inverting input end of an operational amplifier 6 (which is called hereinafter an ope-amp) and an emitter of a transistor 9 through a resistance 5. Also an output $\bar{Q}$ of the FF 4 is connected to a base of the transistor 9 through a pulse circuit 8.

This pulse circuit 8 is such as a differentiation circuit for generating a pulse with a sufficiently short time width at a timing where an output signal developed at the output end $\bar{Q}$ of the FF4 rises from an "L" level to an "H" level.

A non-inverting input end of said ope-amp 6 is applied with a second voltage $V_2$ and an output end of this ope-amp 6 is connected to a collector of the transistor 9 while being connected to one input end of a comparator 10. The other input end of this comparator 10 is applied with a first voltage $V_1$. And 7 is a integrating capacitor which is connected between the emitter and collector of the transistor 9.

Then the description will be made by using timing charts of Fig. 2(a) to Fig. 2(g) with the operation of the ignition apparatus of Fig. 1. Signals of those Figs. 2(a) to 2(g) express signals on those portions shown by (a) to (g) in Fig. 1. A signal shown in Fig. 2(a) is outputted from the pulser 2 and on the other hand a signal shown in Fig. 2(b) is outputted from the pulser 3. Accordingly an output from the output end Q of the FF 4 and that from the output end $\bar{Q}$ thereof are substantially such as shown in Figs. 2(c) and (d) respectively.

First the FF 4 is put in its set state with a signal from the pulser 2 which has detected a maximum ignition advanced position and a discharging circuit is formed of the output end Q of the FF 4, the resistance 5, the capacitor 7 and the output end of the ope-amp 6 to initiate the capacitor 7 to discharge with a predetermined constant current. That is, the discharge current $I_1$ results in

$$I_1 = \frac{V_{OH} - V_2}{R_5}$$

where
$V_{OH}$: Output voltage at its high level from RS FLIP-FLOP 4.
$R_5$: Magnitude of resistance of the resistance 5.

Then when a signal detecting a minimum ignition advanced position is issued from the pulser 3, the FF 4 is inverted from its set state to its reset state to invert the output from the outut end $\bar{Q}$ of the FF 4 from its "L" level to its "H" level. Thus an output is issued from the pulse circuit 8 as shown in Fig. 2(e).

The transistor 9 receives this output to be conductive and both ends of the capacitor 7 is put in shortcircuited state. This capacitor 7 is rapidly discharged and output voltage from the ope-amp 6 becomes the set voltage at the non-inverting input end thereof, that is, the second voltage $V_2$. When the output signal from the pulse circuit 8 disappears then the transistor 9 is non-conducting. Since the FF 4 has already been in its reset state, a charging circuit is formed which is the output end of the ope-amp 6, the capacitor 7, the resistance 5 and the output end Q of the FF 4. The capacitor 7 is initiated to charge with a predetermined constant current. That is, a charging current $I_2$ results in

$$I_2 = \frac{V_2 - V_{OL}}{R_5}$$

where
$V_{OL}$: output voltage at its low level from RS FLIP-FLOP 4.

2

Thereafter the operation is repeated to depict a waveform as shown in Fig. 2(f) by the output voltage from the ope-amp 6.

The comparator 10 comprises the output voltage from said ope-amp 6 with a first voltage $V_1$ to generate a signal at a time point where a discharge voltage on the capacitor 7 is equal to said first voltage $V_1$. Thereafter it is operated so that a high voltage is generated on the secondary side of an ignition coil connected to the semiconductor switch not shown.

At that time assuming that the number of rotations of the engine is of N(RPM), spacing ratios of the maximum ignition advanced position and the minimum ignition advanced position are of $K_1$ and $K_2$, a period is of T seconds, a time interval of from an ignition advance pulse position (Fig. 2(g)) to the minimum ignition advanced position is of t seconds and a capacity of the capacitor 7 is of C farads,

$$V_P = V_2 + \frac{I_2}{C} K_1 T \qquad (A)$$

and

$$V_P - V_1 = \frac{I_1}{C}(K_2 T - t) \qquad (B)$$

result by using the peak voltage $V_P$ on the capacitor 7.

From these two expressions (A) and (B)

$$t = K_2 T - \frac{I_2}{I_1} K_1 T + \frac{C}{I_1}(V_1 - V_2) \qquad (C)$$

results.

The conversion of this time interval of t seconds into an ignition advanced angle $\theta$ results in

$$\theta = 360 \cdot \frac{t}{T}$$

$$= 360° \cdot (K_2 - \frac{I_2}{I_1} K_1) + \frac{6C}{I_1}(V_1 - V_2) \cdot N \qquad (D)$$

and it is understood that the ignition position advances rectilinearly in accordance with the number of rotations of the engine. When in this circuit the number of rotations of the engine is smaller than a certain number of rotations, the voltage across the capacitor 7 becomes higher than the $V_1$ at a time point where the discharge is completed and the ignition advance pulse is issued upon the rapid discharge. In short, the minimum ignition advanced position becomes the ignition position.

The number of rotations with which the ignition advance is initiated is when the voltage across the capacitor 7 at a time point where the discharge is completed is equal to the first voltage $V_1$. This is possible to be freely set by adjusting the first voltage $V_1$, the second voltage $V_2$, the capacity of the capacitor 7, the magnitude of resistance of the resistance 5 etc. Also if the number of rotations of the engine is larger than the certain number of rotations then the peak $V_P$ of the voltage across the capacitor 7 at a time point where the charge is completed becomes less than the $V_1$ and the ignition advance pulse from the comparator 10 is not obtained. In a region of these numbers of rotations the maximum ignition advanced position from the pulser 2 makes an ignition position although it is not illustrated.

The number of rotations with which the ignition advance terminates is when $V_P = V_1$ holds. This can be freely set by adjusting the first voltage $V_1$, the second voltage $V_2$, the charging current $I_2$, the capacity of the capacitor 7 etc. Also the maximum ignition advanced position and the maximum ignition advanced position can be freely set by changing the positions of the pulsers 2 and 3.

Since the conventional ignition apparatus is constructed as described above, it is possible to control the ignition advance proportional to the number of rotations of the engine, but it has not been effected to control the ignition advance with the status of the engine, for example, a temperature or a vacuum in a manifold. Thus there has been the disadvantage that the ignition advance characteristic required for the engine is not sufficiently repaid.

Also as an apparatus of the type referred to there has been previously existed what is illustrated in Japanese laid-open patent application No. 96,365/1980. According to said well-known example, there are required a first triangular wave generator means for generating a reference voltage rising with a predetermined tilted angle from an ignition position of a minimum ignition advance to an ignition position of a maximum ignition advance, flat after the ignition advance and inversely proportional to the number of rotations of the engine, third triangular wave generator means rising from the ignition position of the

3

maximum ignition advance with a predetermined tilted angle according with the status of the engine, and second triangular wave generator means for setting an ignition advance, rising from an intersection of the reference voltage inversely proportional to the number of rotations according to said first triangular wave generator means and said third triangular wave voltage. The first, second and third triangular wave generator means have required separate integrating capacitors respectively. Thus, the ignition advance characteristic includes capacities of the three capacitors in its variables so that there have been the disadvantages that the initial adjustment of the ignition advance characteristic is complicated and the ignition advance characteristic is easily varied with secular changes in capacities of the capacitors. Furthermore there have been also the disadvantages that the integrating capacitor may normally require a high capacity and the hybrid integration of circuits is contrary particularly to rendering the apparatus small sized and cheap.

Also the ignition advance angle has been able to be controlled by changing the gradient of the third triangular wave in accordance with the status of the engine independently of the engine speed. However, a rectilinearly proportional relationship does not exist between amounts of the changes in gradient of said triangular wave voltages and the controlled ignition advance angle so that, for example, where an output signal from an intake manifold vacuum sensor such as rectilinearly changed in accordance with the engine intake manifold vacuum to control the ignition advance angle in proportion to the magnitude of the vacuum, there has been the disadvantage that an interface circuit between the vacuum sensor and a circuit for controlling the gradient of the third triangular wave voltage is complicated.

The present invention has been made in order to remove said prior art disadvantages and has for its object to provide an ignition apparatus for an engine based on semiconductors and able to sufficiently satisfy the required ignition advance characteristic of the engine by detecting a third reference position for controlling a width of an ignition advance and changing this third reference position in accordance with the status of the engine.

Another object of the invention is to provide ignition control apparatus in which the ignition advance is dependent on an operating condition of the invention such as manifold suction, temperature, knock.

A further object of the invention is to provide electronic ignition control apparatus in which the circuitry is of simple construction.

In one aspect, the present invention comprises first means for detecting a first angular reference position of the engine representing the minimum ignition advance angle, second means for detecting a second angular reference position representing the maximum ignition advance angle, third means for detecting a third angular reference position delayed from the second reference position by an angle indicative of an operating condition of the engine other than the engine speed, a capacitor, first circuit means for charging the capacitor at a first predetermined rate during a first period and for discharging it at a second predetermined rate within a second period, comparing means for comparing the voltage on the capacitor with a first reference voltage and for generating an ignition timing signal when the capacitor voltage equals the first reference voltage during said second period, second circuit means for rapidly discharging the capacitor at a third rate much higher than the second rate, semiconductor switch means effecting excitation of the engine ignition coil when actuated by the ignition timing signal, the apparatus being characterised in that the first circuit means is arranged to restrict the first period to the period extending from the detection of the first reference position to the detection of the third reference position and the second period to the period extending from the detection of the third reference position to the time where the capacitor is rapidly discharged, and the second circuit means is arranged to discharge the capacitor to a second reference voltage lower than the first reference voltage at the latest at the detection of the first reference position, but not earlier than at the generation of the ignition signal.

In another aspect, the present invention comprises means for detecting a first and a second angular reference position of the engine, which positions correspond to the minimum and to the maximum ignition advance angle, respectively, and for generating a first timing pulse signal in synchronism with the detection of said reference positions, a capacitor, first circuit means for charging the capacitor at a first predetermined rate during a first period extending from the detection of the first reference position to the detection of the second reference position and for discharging the capacitor at a second predetermined rate during a second period terminating at the detection of the first reference position and starting at a time delayed with respect to the detection of the second reference position by a third period depending on an operating condition of the engine other than the engine speed, second circuit means for defining the length of said third period as a function of said operating condition and for holding the capacitor voltage in this period, comparing means for comparing the voltage on the capacitor with a first reference voltage and for generating a second timing pulse signal when the capacitor voltage reaches the first reference voltage during said second period, third circuit means for rapidly discharging the capacitor at a third rate much higher than the second rate, semiconductor switch means which when actuated effects the excitation of the engine ignition coil, the apparatus being characterised in that the third circuit means is arranged to discharge the capacitor to a second reference voltage lower than the first reference voltage at the latest at the detection of said first reference position but not earlier than at the generation of the second timing pulse signal, the second circuit means comprises means for generating a third timing pulse signal lasting throughout the third period, the first, second and third timing pulse signals are applied to a logic circuit means arranged to derive from said pulse signals an ignition signal actuating the semiconductor switch

(i) at the occurrence of the second timing pulse signal, or

(ii) at the detection of the first reference position if the second timing pulse signal does not occur owing to an engine speed below a first predetermined value, or

(iii) at the detection of the second reference position if the third timing pulse signal does not appear owing to an engine speed higher than a second predetermined value.

Yet another aspect of the invention comprises means for detecting a first and a second angular reference position of the engine, which positions correspond to the minimum and to the maximum ignition advance angle, respectively, and for generating a first timing pulse signal in synchronism with the detection of said reference positions, a first capacitor, first circuit means for charging the first capacitor at a first predetermined rate during a first period extending from the detection of the first reference position to the detection of the second reference position and for discharging the first capacitor at a second predetermined rate during a second period terminating at the detection of the first reference position and starting at a time delayed with respect to the detection of the second reference position by a third period, second circuit means for defining the length of said third period and for holding the voltage of the first capacitor during this period, said second circuit means comprising a second capacitor and a charging/discharging network for charging the second capacitor at a third predetermined rate and for discharging the second capacitor at a fourth predetermined rate, first comparing means for comparing the voltage on the first capacitor with a first reference voltage and for generating a second timing pulse signal when the capacitor voltage reaches the first reference voltage during said second period, third circuit means for rapidly discharging the first capacitor at a fifth predetermined rate much higher than the second rate, semiconductor switch means which when actuated effects the excitation of the engine ignition coil, the apparatus being characterised in that the charging/discharging network is arranged to charge the second capacitor during a fourth period extending from the detection of the second reference position to the detection of the first reference position and to discharge the second capacitor to a third reference voltage within a fifth period directly succeeding the fourth period and terminating before or at the detection of the second reference position, the second circuit means comprises second comparing means for detecting when the voltages on the first and second capacitor are equal and means arranged to generate a third timing pulse signal lasting from the detection of the second reference position to the detection of equality of the voltages on the first and second capacitor which timing pulse signal defines the third period, the third circuit means is arranged to discharge the first capacitor to a second reference voltage lower than the first reference voltage at the latest at the detection of said first reference position but not earlier than at the generation of the second timing pulse signal, the first, second and third timing pulse signals are applied to a logic circuit means arranged to derive from said pulse signals an ignition signal actuating the semiconductor switch

(i) at the occurrence of the second timing pulse signal, or

(ii) at the detection of the first reference position if the second timing pulse signal does not appear owing to an engine speed below a first predetermined value, or

(iii) at the detection of the second reference position if the third timing pulse signal does not appear owing to an engine speed higher than a second predetermined value.

## Brief description of the drawings

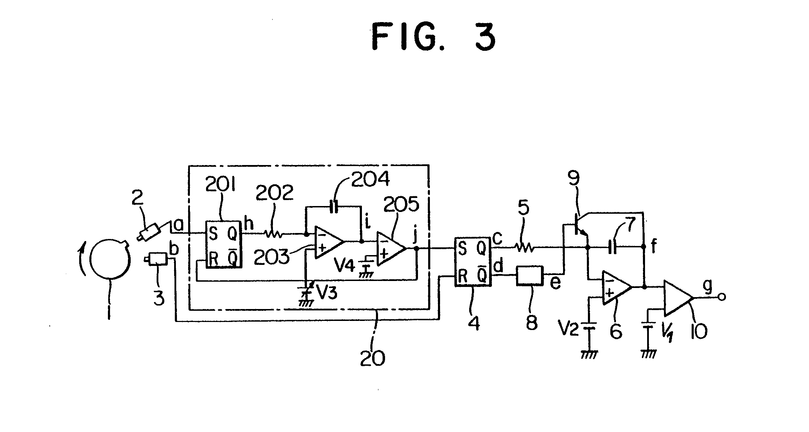

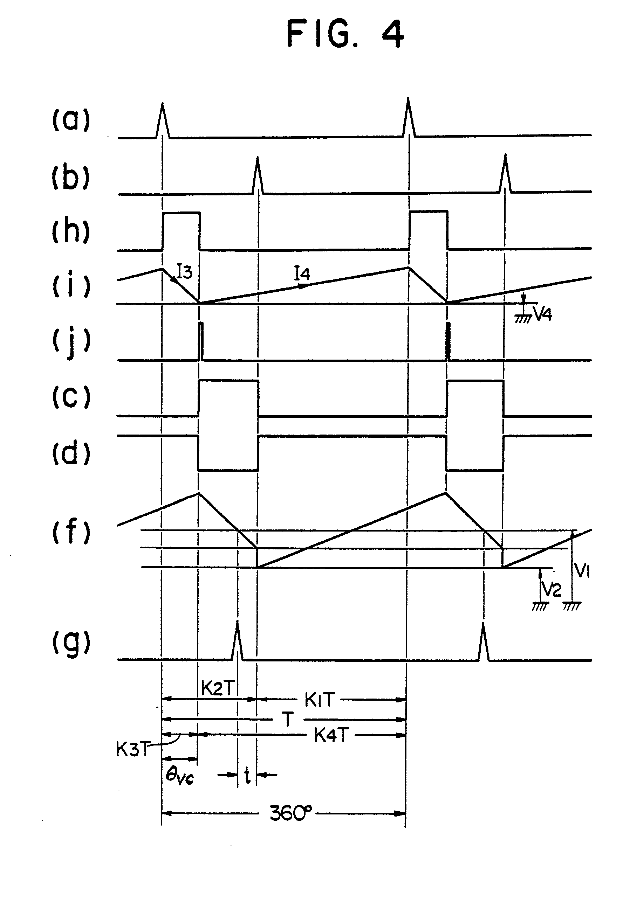

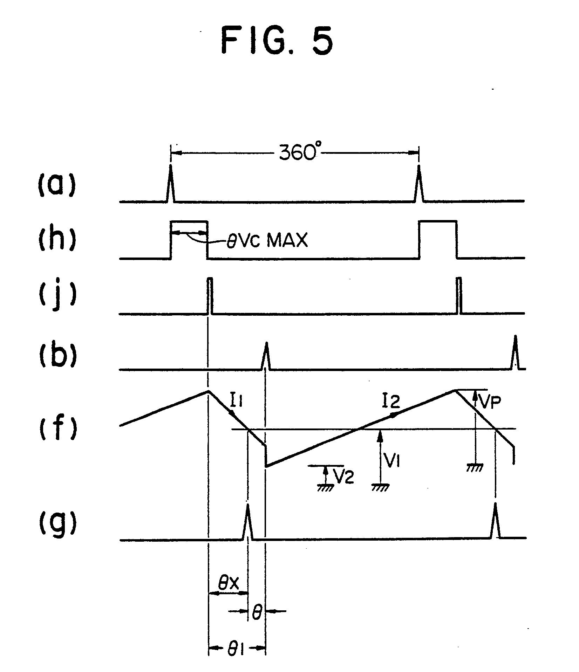

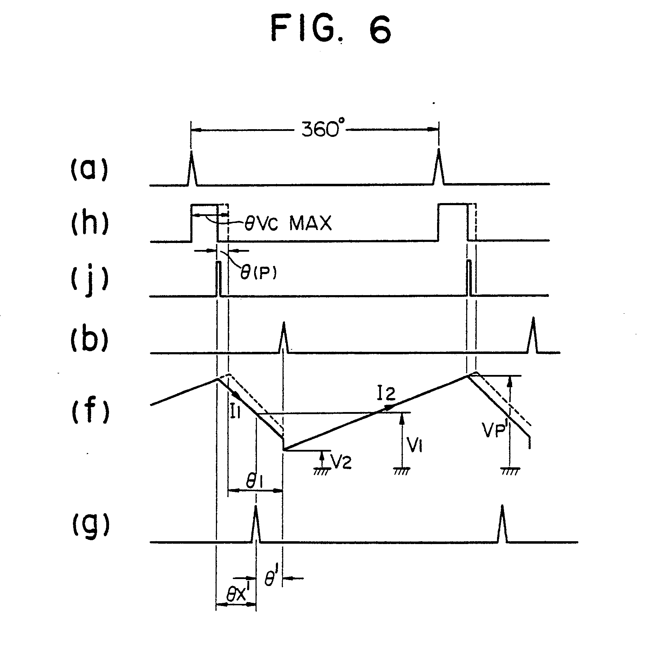

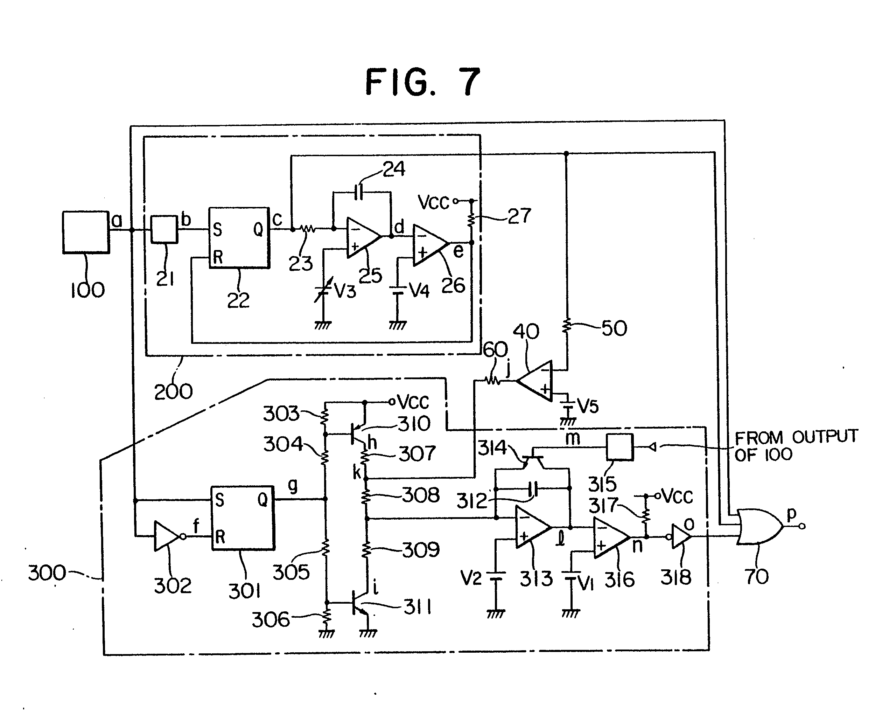

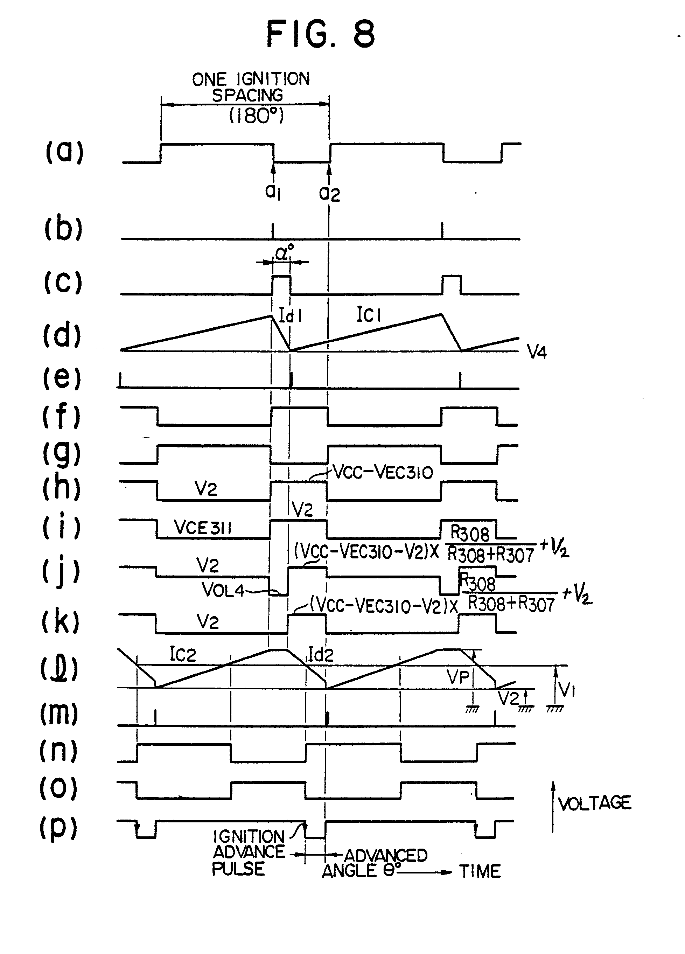

Fig. 1 is a circuit diagram illustrating a conventional ignition apparatus; Fig. 2(a) to Fig. 2(g) are diagrams of operating waveforms in the ignition apparatus of Fig. 1; Fig. 3 is a circuit diagram of one embodiment of the ignition apparatus of the present invention; Figs. 4(a) to 4(j) are diagrams of operating waveforms thereon; Fig. 5(a) to 5(j) are diagrams of operating waveforms on one embodiment of the ignition apparatus of the present invention in the absence of an ignition advance according to the status of the engine; Figs. 6(a) to 6(j) are diagrams of operating waveforms on one embodiment of the ignition apparatus of the present invention in the presence of an ignition advance of θ(p) according to the status of the engine; Fig. 7 is a circuit diagram illustrating another embodiment of the ignition apparatus of the present invention; and Figs. 8(a) to 8(p) are diagrams of operating waveforms on respective portion of the circuit of Fig. 1.

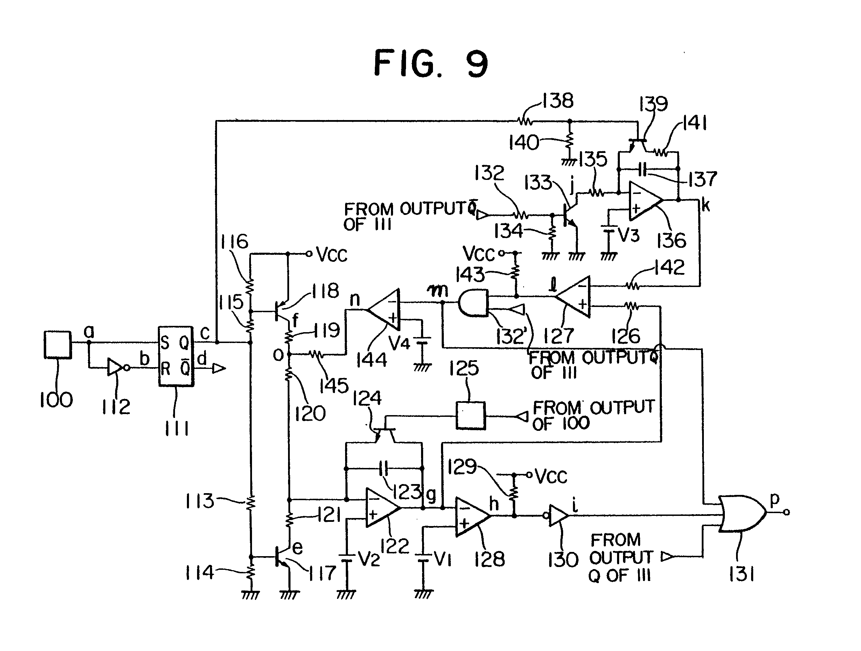

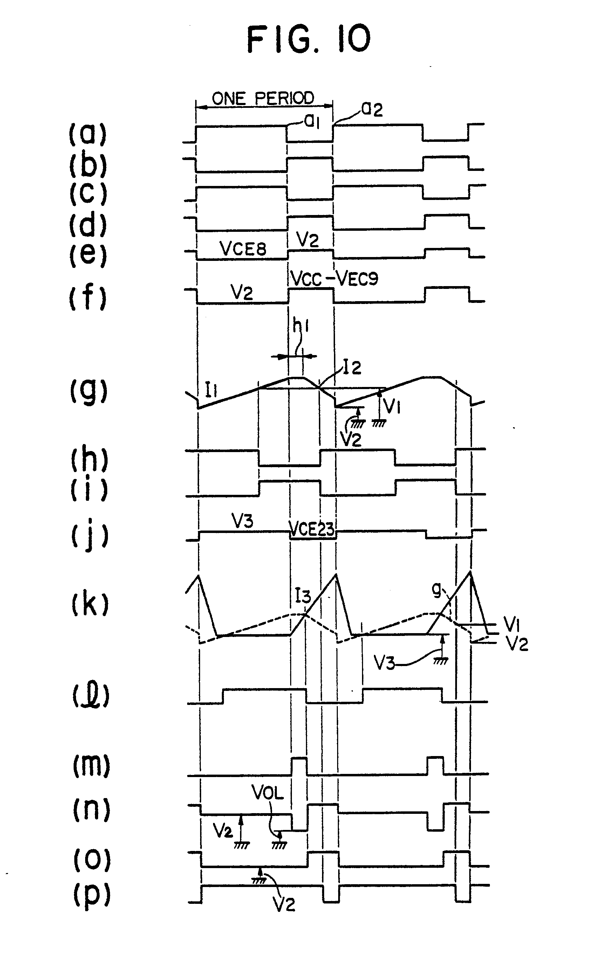

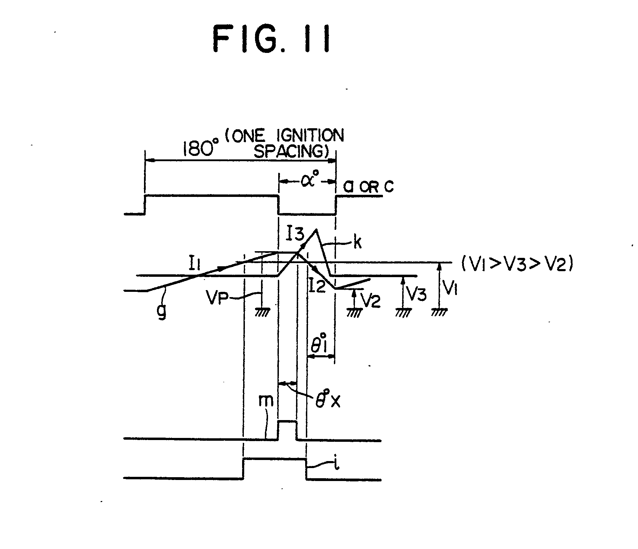

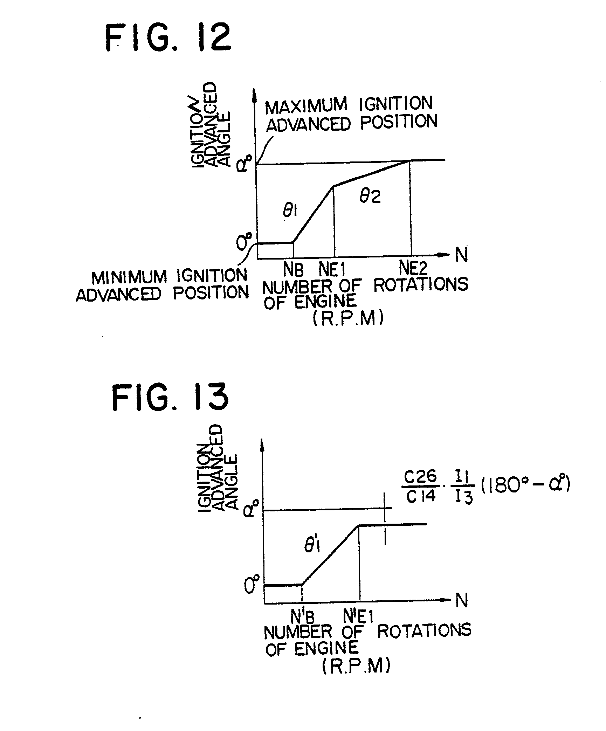

Fig. 9 is an electric current diagram illustrating another embodiment of the ignition apparatus of the present invention; Figs. 10(a) to 10(p) are diagrams of operating waveforms on the same ignition apparatus for an internal combustion engine; Fig. 11 is a diagram illustrating one portion of the operating waveform diagrams of Fig. 10 in order to explain the ignition advanced angle on the same ignition apparatus for the internal combustion engine; Fig. 12 is a diagram of the ignition advance characteristic provided by the same ignition apparatus for the internal combustion engine; and Fig. 13 is a diagram of the ignition advance characteristic provided by a separate embodiment of the ignition apparatus of the present invention for an internal combustion engine.

## Best mode for carrying out the invention

Hereinafter with respect to embodiments of the ignition apparatus of the present invention, the description will be made on the basis of the drawings. Fig. 3 is a circuit diagram illustrating a construction of one embodiment thereof. In this Fig. 3 the same reference numerals designate the components identical to Fig. 1, the description therefor is omitted and it is assumed to principally describe the components different from Fig. 1.

As apparent from the comparison of this Fig. 3 with Fig. 1, Fig. 3 has a constant angle delay circuit 20 newly provided on the circuit of Fig. 1 and this constant angle delay circuit 20 is to have its angle width controlled with a voltage $V_3$ changed in accordance with the status of the engine, for example, a vacuum in a manifold and others. It consists of an FF 201 set with the output from the pulser 2 which detects, from the output of the pulser 3 for detecting the minimum ignition advanced position, a second reference position advanced through an angle not less than the sum of a maximum magnitude of the angle width controlled by said constant angle delay circuit 20 and a maximum magnitude of an advanced angle width proportional to the number of rotations of the engine, a resistance 202 connected between an output at an output end Q of this FF 201 and an inverting input end of an ope-amp 203, an integrating capacitor 204 connected between an output and an inversion input end of this ope-amp 203, and a comparator 205 having an inverting input end connected to the output end of the ope-amp 203. This comparator 205 has an output end connected to a resetting input end of the FF 201 and a setting input end of the FF 4.

Also inputted to a non-inverting input end of the ope-amp 203 is a voltage changed in accordance with vacuum in the manifold and others or a third voltage $V_3$. A non-inverting input end of the comparator 205 is set to a fourth predetermined voltage $V_4$.

Then regarding the operation of the ignition apparatus of the present invention the description will be made by jointly using timing charts of Figs. 4(a) to 4(j), Figs. 5(a) to 5(j) and Figs. 6(a) to 6(g). Waveforms of Figs. 4(a) to 4(j), Figs. 5(a) to 5(j) and Figs. 6(a) to 6(j) correspond to the waveforms on the portions of Figs. 3(a) to 3(j). A signal as shown in Figs. 4(a) is outputted from the pulser 2 while an output as shown in Fig. 4(b) is outputted from the pulser 3 on the other hand. Here it is assumed that the angular difference between the pulser 2 and the pulser 3 is an angular difference not less than the sum of the maximum magnitude of a controlled width of the advanced angle proportional to the number of rotations of the engine and the maximum magnitude of the angle width controlled by the constant angle delay circuit 20.

The FF 201 is put in its set state with the output signal from the pulser 2 and an output at the output end Q thereof is substantially such as shown in Fig. 4(h). At that time there is formed a discharging circuit of the output end Q of the FF 201—the resistance 202—the capacitor 204—the output end of the ope-amp 203 to initiate the capacitor 204 to discharge with a predetermined constant current. That is, a discharge current $I_3$ results in

$$I_3 = \frac{V_{OH} - V_3}{R_{202}}$$

where

$V_{OH}$: output voltage at its high level from RS FLIP-FLOP 201
$R_{202}$: magnitude of resistance of resistance 202

When the voltage at the output end of the ope-amp 203 becomes the set voltage at the non-inverting input end of the comparator 205 or a fourth voltage $V_4$, said comparator 205 generates a comparison output such as shown in Fig. 4(j).

Said FF 201 is inverted to its reset state with the output signal from this comparator 205 as shown in Fig. 4(h) to form a charging circuit of the output end of the ope-amp 203—the capacitor 204—the resistance 202 and the output end Q of the FF 201. The capacitor 204 is initiated to charge with a predetermined constant current. That is, a charge current $I_4$ results in

$$I_4 = \frac{V_3 - V_{OL}}{R_{202}}$$

where

$V_{OL}$: output voltage at its low level from RS FLIP-FLOP 201.

Thereafter the similar operation is repeated so that the output voltage from the ope-amp 203 is substantially such as shown in Fig. 4(i).

Assuming here that spacing ratios of the set and reset states of the FF 201 is of $K_3$ and $K_4$ and an angle width in the set state, is of $\theta_{VC}$,

$$\frac{K_4}{K_3} = \frac{I_3}{I_4} = \frac{V_{OH} - V_3}{V_3 - V_{OL}} = \frac{360° - \theta_{VC}}{\theta_{VC}}$$

results.

That is,

$$\theta_{VC} = \frac{V_3 - V_{OL}}{V_{OH} - V_3} \cdot 360°$$

results and $\theta_{VC}$ is a magnitude of a voltage at the non-inverting input end of the ope-amp 203, that is, constant angle as determined by the third voltage $V_3$.

6

**0 088 130**

As in the conventional ignition apparatus accepting that the output signal from the comparator 205 is connected to the setting input end of the FF 4, it can here be rectilinearly advanced in accordance with the number of rotations of the engine and between the third reference position given by the output signal from said comparator 205 and the first reference position given by the pulser 3.

That is to say, by setting the angle width $\theta_{vc}$ from the constant angle delay circuit 20 to a maximum magnitude as shown in Fig. 5 in the absence of an ignition advanced component due to the status of the engine, for example, the vacuum in the manifold and others, an advanced angle $\theta$ of an ignition advance pulse obtained in Fig. 5(g) results in

$$V_P = V_2 + \frac{I_2}{C} \cdot \frac{360° - \theta_1}{6N} \qquad \text{(E)}$$

and

$$V_P - V_1 = \frac{I_1}{C} \cdot \frac{\theta_x}{6N} \qquad \text{(F)}$$

by using the peak voltage $V_P$ on the capacitor 7, on the assumption that as in the conventional ignition apparatus, the number of rotations of the engine is of N(RPM), an angle between the output (j) from the comparator 205 and the output (b) from the pulser 3 is of $\theta_1$ and an angle between the output (j) from the comparator 205 and the ignition advanced pulse (g) is of $\theta_x$.

From said two expressions (E) and (F)

$$\theta = \theta_1 - \frac{I_2}{I_1}(360° - \theta_1) + \frac{6C}{I_1}(V_1 - V_2) \cdot N \qquad \text{(G)}$$

results and the ignition position is rectilinearly advanced in accordance with the number of rotations of the engine.

When in this circuit the number of rotations of the engine is smaller than a certain number of rotations, the voltage across the capacitor 7 at a time point where the discharge is completed becomes higher than the first voltage $V_1$ and the ignition advance pulse is issued upon the rapid discharge. In short, the minimum ignition advanced position becomes an ignition position. The number of rotations with which the ignition advance is initiated is when the voltage across the capacitor 7 at a time point where the discharge is completed is equal to the first voltage $V_1$. This can be freely set by adjusting the first voltage $V_1$, the second voltage $V_2$, the capacity of the capacitor 7, the magnitude of resistance of the resistance 5 etc.

Also if the number of rotations of the engine is larger than the certain number of rotations, then the peak $V_P$ of the voltage across the capacitor 7 at a time point where the charge is completed is less than the first voltage $V_1$ to be unable to provide the ignition advance pulse from the comparator 10. In a region of this number of rotations, the ignition position is made of a time where the output signal is issued from the comparator 205 although it is not illustrated.

The number of rotations with which the ignition advance terminates is when $V_P = V_1$ holds. This can be freely set by adjusting the first voltage $V_1$, the second voltage $V_2$, the charging current $I_2$, the capacity of the capacitor 7 etc. Also the minimum and maximum ignition advanced positions can be freely set by change the pulser 3 and a delayed angle with from the constant angle delay circuit 20.

Assuming then that the delayed angle from the constant angle delay circuit 20 reduces by $\theta_{(p)}$, an advanced angle $\theta'$ of the ignition advance pulse provided in Fig. 6(g) becomes

$$V'_P = V_2 + \frac{I_2}{C} \cdot \frac{360° - (\theta_1 + \theta_{(p)})}{6N} \qquad \text{(H)}$$

and

$$V'_P - V_1 = \frac{I_1}{C} \cdot \frac{\theta'_x}{6N} \qquad \text{(I)}$$

by using the peak voltage $V'_P$ on the capacitor 7 on the assumption that the number of rotations of the engine is of N(RPM) and an angle between the output j from the comparator 205 and the ignition advance pulse.

From said two expressions (H) and (I)

$$\theta' = \theta_1 + \theta_{(p)} - \theta'_x \quad = \theta_1 - \frac{I_2}{I_1}(360° - \theta_1) + \frac{6C}{I_1}(V_1 - V_2)N + \theta_{(p)} + \frac{I_2}{I_1}\theta_{(p)} \qquad \text{(J)}$$

7

results. The ignition position is formed of an ignition advanced component rectilinearly advanced in accordance with the number of rotations of the engine, component $\theta_{(p)}$ by which the controlled angle width from the constant angle delay circuit 20 changes and an error component of the product of a ratio of the charging to the discharging current through the capacitor 7 and $\theta_{(p)}$.

Accordingly, the ignition advance pulse or the ignition timing can be controlled independently of the number of rotations of the engine by changing the angle width from the constant angle delay circuit 20 in accordance with the status of the engine.

Here the error term of

$$\frac{I_2}{I_1}\theta_{(p)}$$

can be put at a level causing no problem practically.

As described above and according to the ignition apparatus of the present invention the construction is made so that there are provided means for detecting the first reference position making the ignition position of the minimum ignition advance, and means for detecting the second reference position advanced to or beyond the ignition position of the maximum ignition advance, a pulse delayed with a constant angle is generated from the second reference position and the third reference position is detected by controlling a pulse width from this constant angle delay circuit in accordance with the status of the engine whereby the ignition can be rectilinearly advanced between the third and first reference positions in accordance with the number of rotations of the engine. Thus the ignition timing characteristic can be provided to be more optimum according to not only the number of rotations of the engine but also to a vacuum a temperature etc.

Further regarding another embodiment of the present invention the description will be made by using Figs. 7 and 8.

Fig. 7 is a circuit diagram illustrating another embodiment. In this Fig. 7, 100 is a pulser rotated in synchronism with the rotation of the engine to detect an ignition position of a maximum ignition advance and an ignition position of a minimum ignition advance.

Also 200 is a pulse circuit for generating a constant angle pulse from a time point of the detection of the ignition position with the maximum ignition advance, and in accordance with the status of the engine such as a vacuum 21 is a trigger pulse circuit and 22 is a set-reset FLIP-FLOP (which is called hereinafter an F.F.).

An output from the trigger pulse circuit 21 is arranged to be applied to a setting input end S of the FF 22 and an output from an output end Q thereof is arranged to be delivered to an inverting input end of a comparator 40 through a resistance 50 while being arranged to be also outputted to a second input end of an OR circuit 70 (three inputs) and furthermore it is connected to an inverting input end of an operational amplifier 25 (which is called hereinafter an OP amp) through a resistance 23.

An integrating capacitor 24 is connected between the output end and inverting input end of the OP amp 25 with a predetermined voltage $V_3$ imparted to a non-inverting input end of this OP amp 25. The OP amp 25 is to compose an integrator.

An output of the OP amp 25 is connected to an inverting input end of a comparator 26. A predetermined voltage $V_4$ is applied to a non-inverting input end of the comparator 26. The comparator 26 is arranged to compare this voltage $V_4$ with an output voltage from the OP amp 25 to generate a short pulse which is delivered to resetting input end R of the FF 22. The output end of this comparator 26 is connected via a resistance 27 to an electric source a voltage $V_{cc}$ of which is caused to have a constant voltage. Thus the pulse circuit 200 is composed of the trigger pulse circuit 21, the FF 22, the resistance 23, the capacitor 24, the OP amp 25, the comparator 26 and the resistance 27.

On the other hand, 300 is an ignition advance pulse generator circuit for obtaining the ignition advance characteristic in accordance with the number of rotations of the engine among ignition advance characteristics. A setting input end S of an FF 301 in this ignition advance pulse generator circuit 300 is connected to the pulser 100 and a resetting input end R thereof is arranged to have inputted thereto a signal inverted from an output signal from the pulser 100 by an inverter 302.

An output end Q of the FF 301 is connected to the junction of a resistance 304 and a resistance 305. Resistances 303 to 306 are serially connected between the electric source of the voltage $V_{cc}$ and the earth, and the junction of the resistance 303 and 304 is connected to a base of a transistor 310. An emitter of the transistor 310 is connected to said electric source (the voltage $V_{cc}$).

Also the junction of the resistances 305 and 306 is connected to a base of a transistor 311. An emitter of the transistor 311 is earthed and resistances 307 to 309 are serially connected between collectors of both transistors 310 and 311. The junction of the resistances 307 and 308 is connected to the output end of said comparator 40 through a resistance 60. Applied to a non-inverting input end of this comparator 40 is a predetermined voltage $V_5$ and this voltage $V_5$ is arranged to be compared with the output from the FF 22 by the comparator 40.

The junction of the resistances 308 and 309 is connected to an inverting input end of an integrating OP amp 313. A predetermined voltage $V_2$ is applied to a non-inverting input end of this OP amp 313. Also an integrating capacitor 312 is connected between the inverting input and output ends of the OP amp 313.

**0 088 130**

An emitter and a collector of a transistor 314 is connected to be parallel to this capacitor 312.

This transistor 314 is a transistor for rapidly discharging the capacitor 312 and a base of this transistor 314 is arranged to be applied with a trigger pulse signal of a sufficiently short time from a trigger pulse circuit 315. An input end of the trigger pulse circuit 315 is inputted in synchronism with the detection of the ignition position of the minimum ignition advance by the pulser 100 whereby a trigger pulse is generated.

An output from the OP amp 313 is arranged to be sent to an inverting input end of an inversion type comparator 316. The predetermined voltage $V_1$ is applied to a non-inverting input end of the comparator 316. The comparator 316 is arranged to compare this voltage $V_1$ with the output from the OP amp 313. The output end of the comparator 316 is connected to the electric source of the voltage $V_{cc}$ through a resistance 317 while being connected to a third input end of said OR circuit 70 through an inverter 318 for inverting the output thereof. The output from the pulser 100 is arranged ho be inputted to a first input end of the OR circuit 70.

Regarding the operation of the ignition apparatus of the present invention for the internal combustion engine constructed as described above, the description will then be made by jointly using Figs. 8(a) to Fig. 8(p). Those Fig. 8(a) to Fig. 8(p) illustrate signal waveforms at points a to p of Fig. 7, and Fig. 8(a) illustrates the output signal from the pulser 100 which signal is a rectangular wave signal having its output signal level changed from its high (which is called hereinafter "H") level to its low level (which is called hereinafter "L") at a maximum ignition advanced position $a_1$ and changed from its "L" to its "H" at a minimum ignition advance position $a_2$.

The trigger pulse circuit 21 receives the output signal from this pulser 100 to generate a differentiated trigger pulse synchronized with a fall of a waveform of Fig. 8(a) as shown in Fig. 8(b). The FF 22 is set with this differentiated trigger pulse to change an output signal level at the output end Q thereof from its "L" to "H" as shown in Fig. 8(c).

An output from the output end Q of this FF 22 is supplied to the inverting input end of the OP amp 25 through the resistance 23. Thus when the output from the output end Q of said FF 22 is put at its "H" level, the capacitor 24 is initiated to discharge with a constant current $I_{d1}$ as shown in Fig. 2(d). Assuming that a magnitude of a voltage at the "H" level of the output at the output end Q of the FF 22 is of $V_{OH}$ and a magnitude of resistance of the resistance 23 is of $R_{23}$,

$$I_{d1} = \frac{V_{OH} - V_3}{R_{23}} \tag{1}$$

results.

Then when a magnitude of the output voltage from said OP amp 25 reaches the predetermined voltage $V_4$ by means of this discharge, the non-inverting input end of comparator 26 which is set to the predetermined voltage $V_4$ causes comparator 26 whose inversion input end is connected to the output end of the OP amp 25 to output an inversed pulse. The output from this comparator 26 is changed from its "L" to its "H".

Also since the resetting input end R of the FF 22 is connected to the output end of the comparator 26, the FF 22 is immediately reset to change an output at the output end Q thereof from its "H" to "L" as shown in Fig. 2(c). This results in the integrating capacitor 24 reversely charging with a constant current. A magnitude $I_{c1}$ of this constant current results in

$$I_{c1} = \frac{V_3 - V_{OL}}{R_{23}} \tag{2}$$

assuming that a voltage at its L level from the FF 22 is of $V_{OL}$.

Thus the output voltage from the comparator 26 changes immediately from its "H" to its "L" as shown in Fig. 8(e) resulting in a pulse temporally sufficiently short.

As can be seen, an angle $\alpha°$ through which the output from the output end Q of the FF 22 as shown in Fig. 8(c) is at its "H" level becomes a constant angle. Moreover that angle $\alpha°$ changes in the rectilinearly proportional relationship with respect to a change in the predetermined voltage $V_3$.

Assuming hereinafter that a four cycle-four cylinder engine is considered and an angle of rotation of the engine corresponding to one ignition spacing is of 180°, this angular relationship is as follows:

$$\frac{I_{c1}}{I_{d1}} = \frac{V_3 - V_{OL}}{V_{OH} - V_3} = \frac{\alpha°}{180° - \alpha°}$$

Therefore,

$$\alpha° = \frac{V_3 - V_{OL}}{V_{OH} - V_{OL}} \cdot 180° \tag{3}$$

9

On the other hand, the output signal from the pulser 100 is inputted to the setting input end S of the FF 301 and also a signal inverted from the output signal from the pulser 100 by the inverter 302 is inputed to the resetting input end R of this FF 301. Thus an output voltage waveform at the output end Q of the FF 301 is substantially such as shown in Fig. 8(g). An output voltage from the inverter 302 is shown in Fig. 8(f).

Since the resistance 304 forming a base resistance for the transistor 310 is connected to the output end Q of the FF 301, the transistor 310 is turned on when the FF 301 is at its "L" level and a collector voltage thereof is of $V_{cc}-V_{EC310}$ as shown in Fig. 8(h). Here $V_{cc}$ is the magnitude of the source voltage caused to be a constant voltage and $V_{EC310}$ represents a voltage drop across the emitter and collector of the transistor 310. When the output voltage from the output end Q of the FF 301 is at its "H" level, the transistor 310 is in its OFF state.

On the other hand, since the resistance 305 forming a base resistance for the transistor 311 is connected to the output end Q of the FF 301, this transistor 311 is turned on when a voltage from the output end Q of the FF 301 is at its "H" level and a collector voltage thereof is put at its "L" level (which is assumed as $V_{CE311}$) as shown in Fig. 8(i). When the output voltage from the output end Q of the FF 301 is at its "L" level an OFF state is assumed.

As the non-inverting input end of the comparator 40 is set to a predetermined voltage $V_5$ between the voltage $V_{cc}$ and a GND level and as the inverting input end is connected to the output end of the FF 22 through a resistance 50, an "L" level (which is assumed as $V_{OL4}$) results as shown in Fig. 8(j) when the output from the output end Q of the FF 22 is at its "H" level.

Also the comparator 40 is of an open collector type and when an output voltage level of at the output end Q of the FF 22 is at its "L", the output of this comparator 40 is non-conducting and results in an infinitely great resistance.

Here the collector of the transistor 310 is connected to an inverting input end of an OP amp 313 through a series circuit of the resistances 307 and 308, the OP amp 313 forming an integration circuit having its non-inverting input end set to the predetermined voltage $V_2$. Also the junction of the resistances 307 and 308 is connected to the output end of the comparator 40 through a resistance 60. Furthermore a collector resistance 309 for the NPN transistor 311 is connected to the inverting input end of the OP amp 313.

Thus as shown in Fig. 8(h), a collector voltage of the transistor 310 becomes a voltage of $V_{cc}-V_{EC310}$ when this transistor 310 is put in its ON state and becomes the predetermined voltage $V_2$ when it is put in its OFF state.

As shown in Fig. 8(i), the collector voltage of the transistor 311 becomes $V_{CE311}$ when this transistor 311 is put in its ON state and becomes the predetermined voltage $V_2$ when it is put in its OFF state.

As shown in Fig. 8(j), the output voltage from the comparator 40 becomes $V_{OL4}$ when the output voltage from the output end Q of the FF 22 is at its "H" level and is identical to a potential at the junction of the resistances 307 and 308 shown in Fig. 8(k) when the output voltage from the output end Q of the FF 22 is at its "L" level.

That is to say, when the output voltage from the output end Q of the FF 22 is at its "L" level and also the transistor 310 is in its ON state, a voltage at a joint j results in

$$(V_{cc}-V_{EC310}-V_2) \cdot \frac{R_{308}}{R_{308}+R_{307}}+V_2 \qquad (4)$$

Here magnitudes of resistance of the resistance 307 and 308 are considered as $R_{307}$ and $R_{308}$ respectively.

Then when the output voltage from the output end Q of the FF 22 is at its "L" level and also the transistor 310 is put in its OFF state, the predetermined voltage $V_2$ results.

As shown in Fig. 8(k), a voltage at the junction of the resistances 307 and 308 becomes the predetermined voltage $V_2$ when the transistor 310 is put it its OFF state and also becomes

$$(V_{cc}-V_{EC310}-V_2) \cdot \frac{R_{308}}{R_{308}+R_{307}}+V_2$$

when the transistor 210 is put in its OFF state and also the output voltage from the comparator 40 is not of $V_{OL4}$.

Then when the transistor 310 is in its ON state and also the output voltage from the comparator 4 is of $V_{OL4}$, a voltage at a point k is expressed by the following expression:

$$V_{cc}-V_{EC310}-R_{307} \cdot \left\{ \cfrac{V_{cc}-V_{EC310}}{R_{307}+\cfrac{R_{308} \cdot R_6}{R_{305}+R_6}} - \cfrac{V_2}{R_{308}+\cfrac{R_{307} \cdot R6}{R_{307}+R_6}} \right.$$

$$\left. \cdot \cfrac{R_6}{R_{307}+R_6} - \cfrac{V_{OL4}}{R_6+\cfrac{R_{307} \cdot R_{308}}{R_{307}+R_{308}}} \cdot \cfrac{R_{308}}{R_{307}+R_{308}} \right\} \qquad (5)$$

where $R_6$ is considered as a magnitude of resistance of the resistance 60.

The voltage expressed by the expression (5) can be the predetermined voltage $V_2$ by properly setting the magnitudes of the resistances 307 and 60. That is, assuming that $V_{OL4}=0$ and $R_{308}>R_{307}$ and $R_{308}>R_6$ hold for purposes of simplication, the voltage at the point k results in

$$V_{cc}-V_{EC310}-V_2 \cdot \frac{R_6}{R_6+R_{307}} \qquad (6)$$

Thus it can be attained by holding

$$\frac{R_6}{R_6+R_{307}} = \frac{V_{cc}-V_{EC310}-V_2}{V_2} \qquad (7)$$

By means of the above operation, a capacitor 312 connected between the inverting input and output ends of the integrating OP amp 313 has flowing therethrough a charging current with a constant current indicated by

$$I_{c2}=\frac{V_2-V_{CE311}}{R_{309}} \qquad (8)$$

when the transistor 311 is in its ON state.

Then when the transistor 310 is turned on and also an output voltage from the comparator 40 is at its "L" level, potentials at both ends of the resistance 308 are equal to each other and therefore the output voltage from the OP amp 313 is held without the capacitor 312 charging and discharging.

Then if the output from the comparator 40 is not as its "L" level in the ON state of the transistor 310 then the capacitor 312 has flowing therethrough a discharging current with a constant current shown by

$$I_{d2}=\frac{V_{cc}-V_{EC310}-V_2}{R_{307}+R_{308}} \qquad (9)$$

Also a transistor 314 is turned on at a rise of the output signal from the pulser 100 or with an output signal (Fig. 8(m)) from the trigger pulse circuit 315 for generating the differentiated trigger pulse in synchronism with the minimum ignition advanced position to rapidly discharge a charged electric charge on the capacitor 312. Thus an output signal from the OP amp 313 is substantially such as shown in Fig. 2(l).

The comparator 316 is an inversion type comparator for comparing the output signal from the OP amp 313 with the predetermined voltage $V_1$ to output an inverted pulse and an output signal voltage therefrom is substantially such as shown in Fig. 8(n) and further inverted by an inverter 318 to generate an output signal of Fig. 8(o).

The OR circuit 70 takes an OR of the output signal from the pulser 100, the output signal from the output end Q of the FF 22 and the output signal from the inverter 318 to generate an output shown in Fig. 8(p). Hereinafter an output signal from this OR circuit 70 is inputted to a semiconductor switch circuit not shown and operated to generate an ignition high voltage on an ignition coil intermitted and controlled by that semiconductor switch circuit and in synchronism with a fall of the output signal from the OR circuit 70.

At that time, assuming that the number of rotations of the engine is of $N_{R.P.M}$, an angle between the maximum ignition advanced position and the minimum ignition advanced positions is of $\theta_M°$, a period is of T seconds, the peak of the output voltage from the OP amp 313 is of $V_p$, a capacity of the capacitor 312 is of C farads, a time interval of from the ignition advance pulse (a fall of Fig. 8(p)) to the minimum ignition advanced position is of t seconds and an advanced angle of the ignition advance pulse is of $\theta°$, the following concerned expressions are obtained:

$$V_P = \frac{I_{C2}}{C} \cdot \frac{180° - \theta_M°}{180°} \cdot T + V_2 \tag{10}$$

and

$$V_P - V_1 = \frac{I_{d2}}{C} \cdot \left( \frac{\theta_M°}{180°} T - t \right) \tag{11}$$

Solving the expressions (10) and (11) results in

$$t = \frac{\theta_M° - \alpha°}{180°} T - \frac{I_{C2}}{I_{d2}} \frac{180° - \theta_M}{180°} \cdot T + \frac{C}{I_{d2}} (V_1 - V_2) \tag{12}$$

By changing it to the advanced angle $\theta°$,

$$\theta = 180° \cdot \frac{t}{T} = (\theta°_M - \alpha°) - \frac{I_{C2}}{I_{d2}} (180 - \theta_M°) + \frac{6_c}{I_{d2}} (V_1 - V_2) \cdot N \tag{13}$$

results. The ignition advance pulse is expressed by a term rectilinearly advancing the ignition in accordance with the number of rotations of the engine, the pulse width $\alpha°$ from the constant angle delay circuit 200 variable in pulse width in the rectilinear relationship with respect to a change in predetermined voltage $V_3$ by changing this voltage $V_3$ in accordance with the status of the engine such as the vacuum and others and independently of the number of rotations of the engine, and a constant term.

That is to say, considering first an advanced angle component with fixing the pulse width $\alpha°$ of the contact angle from the constant angle pulse circuit 20, the voltage $V_c$ on the capacitor 312 at the time point where the discharge is completed becomes higher than the $V_1$ when number of rotations of the engine is smaller than a certain number of rotations, and the ignition advance pulse is issued upon the rapid discharge. In other words, the minimum ignition advanced position makes the ignition position. The number of rotations with which the minimum ignition advance is initiated is when $V_c = V_1$ holds. This can be freely set by adjusting $V_1$ or $I_{d2}$ or the like.

Also if the number of rotations of the engine becomes larger than the certain number of rotations then the voltage $V_P$ across the capacitor 312 at the time point when the charge is completed becomes lower than the $V_1$ to leave the output voltage from the comparator 316 at its "H" level as it is. Thus the output signal from the inverter 318 inverted from the output signal from this comparator 316 is left at its "L" level as it is. Thereby the ignition timing is made of the fall of the constant angle pulse from the constant angle pulse circuit 200 or the fall of the output signal from the FF 22. The number of rotations with which the ignition advance dependent upon the rotation terminates is when $V_P = V_1$ holds. This can be freely set by adjusting the $V_2$ or the $I_{c2}$ or the like.

Then if the voltage of $V_3$ is changed in accordance with the status of the engine such as the vacuum and others then the $\alpha°$ changes in the rectilinear relationship with respect to this change in $V_3$ so that the ignition advance pulse can be moved in parallel without depending upon the number of rotations.

After the ignition advance due to the number of rotations has terminated, the constant angle pulse $\alpha°$ can be advanced until 0° is reached. At that time the maximum ignition advanced position becomes a maximum ignition advanced position as determined by the pulser 100.

While in said embodiment the description has been made in conjunction with a change in constant angle pulse width $\alpha°$ by means of the vacuum, the ignition timing can be also controlled by controlling the voltage $V_3$ by a knocking detector detecting knocking of the engine to generate a signal voltage in accordance with the knocking.

As described above and according to an embodiment of the ignition apparatus of the present invention for the internal combustion engine, there is provided the pulser 100 for detecting the maximum and minimum ignition advanced positions, in synchronism with the rotation of the engine, a capacitor being arranged to charge between the minimum and maximum ignition advanced positions, a constant angle pulse being generated from the maximum ignition advanced position by the constant angle pulse circuit capable of changing an angle width in the rectilinear relationship with a predetermined voltage $V_3$ in accordance with the status of the engine, a voltage across a further capacitor being held between these constant angle pulses, the discharge of said further capacitor being initiated after the termination of said constant angle pulse, an ignition timing being made of a point where the voltage on that further capacitor is equal to the predetermined voltage $V_1$, the voltage across said capacitor being rapidly discharged to a predetermined voltage $V_2$ at at least the position of the minimum advance the ignition timing being made of a time point where said constant angle pulse falls with the numbers of rotations not less than the number of rotations with which the voltage across the further capacitor after the completion of the charge, is not higher than the $V_1$, and furthermore in the absence of the constant angle pulse, the ignition timing is made of the position of the maximum ignition advance as determined by the pulser. Thus the ignition advance characteristic required for the engine can be obtained with one capacitor for calculating an ignition advance dependent upon the number of rotations and one capacitor for the constant angle pulse circuit and the apparatus can be rendered cheap and small-sized.

Also since the rectilinearly proportional relationship exists between a change in predetermined voltage $V_3$ and the pulse width $\alpha°$ of the constant angle pulse, there is the effect that the control is easily effected upon changing the ignition advanced angle with a magnitude of a voltage in accordance with the vacuum of the engine and others without depending upon the number of rotations.

Furthermore regarding another embodiment of the present invention the description will be made by using Figs. 9 to 13.

Fig. 9 is a circuit diagram illustrating a construction of one embodiment thereof and in this Fig. 9, 100 is a pulser for detecting a maximum ignition advanced position and a minimum ignition advanced position in synchronism with the rotation of the engine, and 111 is a set-reset FLIP-FLOP circuit (which is called hereinafter an FF) a setting input terminal of which is inputted with an output signal from the pulser 1 and a resetting input terminal of which is arranged to be inputted with a signal inverted from the output signal from the pulser 100 by an inverter 112.

113 to 116 are resistances. These resistances 113 to 116 are serially connected between the earth and a source voltage $V_{cc}$ and the junction of the resistances 113 and 114 is connected to a base of an NPN type transistor 117.

Also connected to the junction of the resistances 113 and 115 is an output terminal Q of said FF 111. The junction of the resistances 115 and 116 is connected to a base of a PNP type transistor 118. An emitter of the transistor 118 is connected to the electric source $V_{cc}$. A collector of the transistor 118 is connected to a collector of the transistor 117 through resistances 119, 120 and 121. An emitter of the transistor 117 is earthed. Said source voltage $V_{cc}$ is a voltage caused to be a constant voltage.

The junction of said resistances 120 and 121 is connected to an inverting input terminal of an operational amplifier (which is called hereinafter an OP amp) 122 forming an integrator. A non-inverting input terminal of this OP amp 122 is set to a second predetermined voltage $V_2$ and also an integrating capacitor 123 is connected between an inverting input terminal and an output terminal of the OP amp 122 while a collector and an emitter of a transistor 124 are connected thereto. The output signal from said pulser 100 is arranged to be supplied to a base of this transistor 124 through a trigger pulse circuit 125.

This trigger pulse circuit 125 receives the output signal from the pulser 100 to generate a differentiated trigger pulse upon the detection of the minimum ignition advanced position and the transistor 124 is arranged to be turned on for a short time interval with this trigger pulse to rapidly discharge an integrated voltage on the capacitor 123.

The output terminal of the OP amp 122 is connected to a non-inverting input terminal of a comparator 127 through a resistance 126 while being connected to an inverting input terminal of a comparator 128. A first predetermined voltage $V_1$ is set on a non-inverting input terminal of the comparator 128. The comparator 128 is arranged to compare the output voltage from the OP amp 122 with the voltage $V_1$ to output an inversion type comparison pulse. An output terminal of this comparator 128 is applied with the source voltage $V_{cc}$ through a resistance 129 while being connected to a second input terminal of an Or circuit 131 through an inverter 130.

A first input terminal of the OR circuit 131 has inputted thereto an output from an AND circuit 132 and a third input terminal of the OR circuit 131 is connected to the output terminal Q of the FF 111.

On the other hand, the output terminal $\bar{Q}$ of said FF 111 is connected to a base of a transistor 133 through a resistance 132. The base of the transistor 133 is earthed through a resistance 134 and an emitter is also earthed. A collector of the transistor 133 is connected to an inverting input terminal of an integrating OP amp 136 through a resistance 135.

A third predetermined voltage $V_3$ is applied to a non-inverting input terminal of the OP amp 136. An integrating capacitor 137 is connected between an output terminal and an inverting input terminal of this OP amp 136. Also the output terminal Q of said FF 111 is connected to the base of a transistor 139 through a resistance 138. The transistor 139 is to discharge the capacitor 137 and the base thereof is earthed through a resistance 140, the emitter being connected to the inverting input terminal of the OP amp 136 and the collector is connected to the output terminal of the OP amp 136 through a resistance 141.

The output terminal of the OP amp 136 is connected to the inverting input terminal of the comparator 127 through a resistance 142. The output terminal of the comparator 127 is connected to a first input terminal of the AND circuit 132' while being applied with the source voltage $V_{cc}$ through a resistance 143. A second input terminal of the AND circuit 132 is connected to an output terminal $\bar{Q}$ of the FF 111. As described above, the output terminal of this AND circuit 132' is connected to the first input terminal of the OR circuit 131 while being connected to an inverting input terminal of a comparator 144. A fourth predetermined voltage $V_4$ is applied to a non-inverting input terminal of the comparator 144. An output terminal of this comparator 144 is connected to the junction of resistances 119 and 120 through a resistance 145.

Further the output terminal of said OR circuit 131 is connected to a semiconductor switch not shown and this semicondcuctor switch is connected to an ignition coil for generating an ignition high voltage.

Then regarding the operation of the ignition apparatus constructed as described above of the present invention for an internal combustion engine, the description will be made with reference to Fig. 10 *et seq.* Fig. 10 is a diagram of operationg waveforms illustrating one embodiment of the present invention as shown in Fig. 9. Fig. 10(a) is a waveform of the as shown in Fig. 9. Fig. 10(a) is a waveform of the output signal voltage from the pulser 100 the level of which changes from its high level (which is called hereinafter an H) to its low level (which is called hereinafter an L) upon the detection of a maximum ignition advanced position $a_1$ and changes from its "L" to its "H" upon the detection a minimum ignition advanced position $a_2$.

Fig. 10(b) is the output signal from the inverter 112 which is what is inverted from the signal voltage of Fig. 10(a).

It is assumed that the FF 111 is set with the output signal from the pulser 100 and reset with the output signal from the inverter 112 and that output signals from the output terminal Q and output terminal $\bar{Q}$ of this FF 111 are substantially such as shown in Figs. 10(c) and (d) respectively.

Since the transistor 117 is turned on when the output signal from the output terminal Q of the FF 111 is at its "H" and turned off when the output signal from this FF 111 is at its "L", a collector voltage thereof is substantially such as shown in Fig. 10(e). Here $V_{CE8}$ is a collector-emitter voltage when the transistor 117 is in its ON state.

The transistor 118 is turned on when the output signal from the output terminal Q of the FF 111 is at its "L" and turned off when the output signal from the output terminal Q of this FF 111 is at its "H" and therefore the collector voltage of the transistor 118 is what is shown in Fig. 10(f). That is, when the transistor 118 is in its ON state, a collector voltage thereof is of $V_{cc}-V_{CE9}$. Here $V_{CE9}$ is an emitter to collector voltage of the transistor 118 when it is in its ON state.

Also when the transistor 118 is in its OFF state, an output stage transistor of the comparator 144 is in its OFF state through the operation as will be described later and the output of that comparator 144 and the GND have an infinitely great resistance therebetween. Thus the collector voltage of said transistor 118 becomes a voltage at the inverting input terminal of OP amp 122, or $V_2$.

The OP amp 122 forms an integration circuit with the capacitor 123 and an output signal therefrom is substantially such as shown in Fig. 10(g). That is to say, when the transistor 117 is in its ON state from the minimum ignition advanced position $a_2$ (Fig. 10(a)) to the maximum ignition advanced position $a_1$, the capacitor 123 is charged with a constant current $I_1$.

$$I_1 = \frac{V_2 - V_{CE8}}{R_{10}} \tag{14}$$

where $R_{10}$ is magnitude of resistance of the resistance 121.

Then the transistor 118 is in its ON state from the maximum ignition advanced position $a_1$ to the minimum ignition advanced position $a_2$ and the capacitor 123 is discharged with a constant current $I_2$.

$$I_2 = \frac{V_{cc} - V_{CE9} - V_2}{R_{12} + R_{13}} \tag{15}$$

Here $R_{12}$ and $R_{13}$ are magnitudes of resistance of the resistances 119 and 120 respectively.

In this case since the comparator 144 is in its ON state for a certain time period from the maximum ignition advanced position $a_1$ through the operation of the comparator 144 as will be described later, the resistance 145 can be set so as to equal a voltage at the junction of the resistances 119 and 120 to the predetermined voltage $V_2$.

This results in the voltage across the capacitor 123 being held for a time period in which the comparator 144 is in its ON state. In Fig. 10(g) $h_1$ designates this held time period.

Also the transistor 124 is turned on for a short time interval with the trigger pulse from the trigger pulse circuit 125 receiving the output signal from the pulser 100 to generate the differentiated trigger pulse and therefore an electric charge on the capacitor 123 is rapidly discharged. Thus a voltage at the output terminal of the OP amp 122 becomes the predetermined voltage $V_2$ imparted to the non-inverting input terminal of the OP amp 122 as shown in Fig. 10(g).

The comparator 128 compares the output signal from the OP amp 122 with the first predetermined voltage $V_1$ to generate a comparison pulse signal as shown in Fig. 10(h). Then as shown in Fig. 10(i) the output signal from the comparator 128 is inverted by the inverter 130 and inputted to the OR circuit 131.

On the other hand, since the transistor 133 is turned on when the output from the output terminal $\bar{Q}$ of the FF 111 is in its "H" that is, between the maximum ignition advanced position $a_1$ and the minimum ignition advanced position $a_2$, a collector voltage of the transistor 133 is substantially such as shown in Fig. 10(j). Here when the transistor 133 is in its ON state, a collector-to-emitter voltage is assumed as $V_{CE23}$.

14

When the transistor 133 is in its ON state the capacitor 137 is charged with a constant current $I_3$.

$$I_3 = \frac{V_3 - V_{CE23}}{R_{25}} \tag{16}$$

Here it is assumed that a magnitude of resistance of the resistance 135 is of $R_{25}$.

On the other hand the transistor 139 is turned on when the output at the output terminal Q of the FF 111 is at its "H", that is, between the minimum ignition advanced position $a_2$ and the maximum ignition advanced position $a_1$ to discharge an electric charge on the capacitor 137 with a predetermined time constant. Thus an output signal voltage from the OP amp 136 is substantially as shown in Fig. 10(k).

The comparator 127 compares the output signal voltage from the OP amp 122 with the output signal voltage from the OP amp 136 to generate a comparison pulse as shown in Fig. 10(l). As shown in Fig. 10(m) the AND circuit 132 generates an AND pulse of the output signal from the comparator 127 and the output signal from the output terminal Q̄ of the FF 111. An output signal from this AND circuit 132' is inputted to the OR circuit 131 and the comparator 144.

The comparator 144 compares a fourth predetermined voltage $V_4$ imparted to the non-inverting input terminal thereof with the output signal from the AND circuit 132' to output a signal as shown in Fig. 10(n). That is, by setting the fourth predetermined voltage $V_4$ to be less than a level at which the output signal from the AND circuit 132' is at its "H", there is provided a signal inverted from the output signal from the AND circuit 132'.

When the output signal from the AND circuit 132 is at its "H" level the output signal from the comparator 144 becomes $V_{OL}$.

Here $V_{OL}$ designates the "L" level of this comparator 144.

When the output signal from the AND circuit 132' is at its "L" level, the comparator 144 becomes an open collector. Thus the output signal from the comparator 144 becomes the second predetermined voltage $V_2$ from the minimum ignition advanced position $a_1$ to the maximum ignition advanced position $a_1$. Between the maximum ignition advanced position $a_1$ and the minimum ignition advanced position $a_2$ and moreover for a time period excepting that the output signal from the AND circuit 132 is at its "H" level, the output signal voltage from the comparator 144 is equal to a voltage at the junction of the resistances 119 and 120.

That is

$$\frac{R_{12}}{R_{12} + R_{13}}(V_{cc} - V_{EC9} - V_2) + V_2 \tag{17}$$

results.

Here it is assumed that magnitudes of resistance of resistances 119 and 120 are of $R_{12}$ and $R_{13}$ respectively.

The voltage at the junction of said resistance 119 and the resistance 120 is substantially such as shown in Fig. 10(o). That is to say, it is equal to the predetermined voltage $V_2$ between the minimum ignition advanced position $a_2$ and the maximum ignition advanced position $a_1$ and also it becomes the magnitude as shown in said expression (17) between the maximum ignition advanced position $a_1$ and the minimum ignition advanced position $a_2$ and also for the time period exception that the output signal from the AND circuit 132' is at its "H" level.

Also for a time period for which the output signal from said AND circuit 132' is at its "H" level, that is, for a time period for which the output signal from the comparator 144 is at $V_{OL}$, it can be equal to the second predetermined voltage $V_2$ by properly setting magnitudes of the resistance 119 and a resistance 145. Thus the voltage across the capacitor 123 is held as shown in Fig. 10(g) between the maximum ignition advanced position and a time point where the OP amp 122 is equal in output signal voltage to the OP amp 136.

Since the OR circuit 131 has inputted thereto the output signal from the output terminal Q of the FF 111, the output signal from the inverter 130 and the output signal from the AND circuit 132', there is provided an output signal as shown in Fig. 10(p) at the output of the OR circuit 131. Thereafter the output of the OR circuit 131 is connected to a semiconductor switch not shown and operated to generate an ignition high voltage on the secondary side of an ignition coil in synchronism with the fall of the output signal voltage from the OR circuit 131, which coil has a winding on the primary side thereof intermitted and controlled in conduction by this semiconductor switch.

Then regarding an ignition timing, the detailed description will be made by using Fig. 11 and Fig. 12. Fig. 11 shows one part of the operating waveforms illustrated in Fig. 10. Fig. 12 shows the ignition advanced angle characteristic relative to the number of rotations of the engine obtained by one embodiment of the present invention.

Assuming that, as the engine, a four cycle-four cylinder engine is considered, the component of the output signal from the pulser 100 for one period corresponds to 180° of angle of rotation of the engine and is also equivalent to the one ignition spacing. If it is assumed that an angle of rotation of the engine of from the minimum ignition advanced position to the maximum ignition advanced position is of α° as shown in Fig. 11, an angle of rotation of the engine corresponding to a pulse width of the output signal from the AND

15

circuit 132' is of $\theta_x°$, an angle of rotation of from the minimum ignition advanced position to a time point where the output signal from the OP amp 122 is equal to the first predetermined voltage $V_1$ during the discharge of the capacitor 123 is of $\theta_1°$ and the number of rotations of the engine is of $N_{RPM}$.

First $\theta_x°$ is obtained. Assuming that a voltage at a point (g) at the maximum ignition advanced position is of $V_P$ and a voltage at a point k being charged with the constant current $I_3$ is of $V_c$,

$$V_P = \frac{I_1}{C_{14}} \cdot \frac{180°-\alpha°}{6N} + V_2 \qquad (18)$$

and

$$V_c = \frac{I_3}{C_{26}} \cdot \frac{\theta_x°}{6N} + V_3 \qquad (19)$$

result respectively,

Here it is assumed that capacities of the capacitors 123 and 137 are of $C_{14}$ and $C_{26}$ farads. From $V_P = V_c$ here, $\theta_x°$ results in

$$\theta_x° = \frac{C_{26}}{C_{14}} \cdot \frac{I_1}{I_3} (180°-\alpha°) - \frac{6C_{26}}{I_3}(V_3-V_2) \cdot N \qquad (20)$$

Then obtaining $\theta_1$ results in

$$V_P - V_1 = \frac{I_2}{C_{14}} \cdot \frac{\alpha°-\theta_x°-\theta_1°}{6N} \qquad (21)$$

Thus solving simultaneously this and the expression (18) results in

$$\theta_1° = \alpha° - \theta_x° - \frac{I_1}{I_2}(180°-\alpha°) + \frac{6C_{14}}{I_2}(V_1-V_2) \cdot N \qquad (22)$$

By substituting this expression (20) into the expression (22),

$$\theta_1° = \alpha° - \frac{C_{26}}{C_{14}} \cdot \frac{I_1}{I_3}(180°-\alpha°) - \frac{I_1}{I_2}(180°-\alpha°) + \frac{6C_{14}}{I_2}(V_1-V_2) \cdot N + \frac{6C_{26}}{I_3}(V_3-V_2) \cdot N \qquad (23)$$

results.

From the above concerned expressions the ignition timing is as will be subsequently described. First when the number of rotations of the engine is less than the number of rotations shown by $N_B$ in Fig. 12, the voltage on the capacitor 123 at the time point where the discharge is completed becomes higher than the first predetermined voltage $V_1$ and the output signal voltage from the OR circuit 131 falls during the rapid discharge at the minimum ignition position. In other words, the minimum ignition position becomes the ignition timing. The number of rotations $N_B$ with which the ignition advance is initiated is when $\theta_1° = 0$ holds in the expression (23), and

$$NB = \frac{\alpha° - \dfrac{C_{26}}{C_{14}} \cdot \dfrac{I_1}{I_3}(180°-\alpha°) - \dfrac{I_1}{I_2}(180°-\alpha°)}{\dfrac{6C_{14}}{I_2}(V_1-V_2) + \dfrac{6C_{26}}{I_3}(V_3-V_2)} \qquad (24)$$

results.

An advanced angle until the number of rotations of the engine reaches the $N_{E1}$ in Fig. 12 becomes $\theta_1°$ shown in the expression (23). Upon this number of rotations $N_{E1}$ being reached, the voltage on the capacitor 123 up to the time point where the charge is completed is equal to the voltage $V_1$ and from the expression (18) $N_{E1}$ results in

$$N_{E1} = \frac{I_1}{6C_{14}(V_1-V_2)}(180°-\alpha°) \qquad (25)$$

Upon the number of rotations of the engine exceeding said $N_{E1}$, the voltage $V_P$ on the capacitor 123 at the time point where the charge is completed is less than the voltage $V_1$ and the output signal from the inverter 130 remains at its "L" level as it is. Thus, when the output signal voltage from the AND circuit 132' falls, the signal voltage from the OR circuit 131 falls. In other words,

$$\theta_2{}^\circ = \alpha^\circ - \theta_x{}^\circ \tag{26}$$

results, assuming that an ignition advanced angle in a region of this number of rotations is of $\theta_2{}^\circ$. Thus

$$\theta_2{}^\circ = \alpha^\circ - \frac{C_{26}}{C_{14}} \cdot \frac{I_1}{I_3}(180^\circ - \alpha^\circ) + \frac{6C_{26}}{I_3}(V_3 - V_2) \cdot N \tag{27}$$

results.

Then when the number of rotation of the engine becomes the number of rotations as shown by $N_{E2}$ in Fig. 12, the voltage $V_P$ on the capacitor 123 at the time point where the charge is completed is equal to the voltage $V_3$ and from the expression (18) $N_{E2}$

$$N_{E2} = \frac{I_1}{6C_{14}(V_3 - V_2)}(180^\circ - \alpha^\circ) \tag{28}$$

results.

Upon the number of rotations of the engine exceeding said $N_{E2}$, the output signals not only from the inverter 130 but also from the AND circuit 132' are at their "L" level as intact and when the output signal voltage from the output terminal Q of the FF 111 falls, the output signal voltage from the OR circuit 131 falls. In other words, the maximum ignition advanced position become an ignition timing. That is, the ignition advanced angle is of $\alpha^\circ$.

In the above-mentioned way the ignition timing has the ignition advance characteristic such ay shown in Fig. 12.

Furthermore, it has been assumed in the said embodiment that $V_1 > V_3 > V_2$ holds but assuming that $V_1 > V_3 = V_2$ holds, the ignition advance characteristic is obtained as shown in Fig. 13. In Fig. 13, the number of rotations $N'_B$ with which the ignition advance is initiated results in

$$N'_B = \frac{\alpha^\circ - \dfrac{C_{26}}{C_{14}} \cdot \dfrac{I_1}{I_3}(180^\circ - \alpha^\circ) - \dfrac{I_1}{I_2}(180^\circ - \alpha^\circ)}{\dfrac{6C_{14}}{I_2}(V_1 - V_2)} \tag{29}$$

by substituting $V_3 = V_2$ into the expression (24). Assuming that ignition advanced angle after the initiation of the ignition advance is of $\theta^\circ_1$,

$$\theta'_1 = \alpha^\circ - \frac{C_{26}}{C_{14}} \cdot \frac{I_1}{I_3}(180^\circ - \alpha^\circ) - \frac{I_1}{I_2}(180^\circ - \alpha^\circ) + \frac{6C_{14}}{I_2}(V_1 - V_2) \cdot N \tag{30}$$

results from the expression (23).

Also the number of rotations $N'_{E1}$ with which the ignition advance terminates is the same as $N_{E1}$ shown by the expression (25). Also an ignition advanced angle at that time results in $\alpha^\circ - \theta_x{}^\circ$ that is, in

$$\alpha^\circ - \frac{C_{26}}{C_{14}} \cdot \frac{I_1}{I_3}(180^\circ - \alpha^\circ)$$

because, substituting $V_3 = V_2$ into the expression (20) results in

$$\theta_x{}^\circ = \frac{C_{26}}{C_{14}} \cdot \frac{I_1}{I_3}(180^\circ - \alpha^\circ) \tag{31}$$

from which $\theta_x{}^\circ$ becomes a constant angle.

As described above, and according to the ignition apparatus of the present invention for an internal combustion engine, it is arranged to obtain the ignition advanced angle by means an electronic circuit composed of two integrating capacitors. Thus there is the effect that the adjustment of the ignition advance characteristic is simple, and a variation in the ignition advance characteristic relative to secular changes in capacities of the capacitors becomes small while it can contribute to rendering the apparatus small-sized and cheap.

Industrial applicability

The present invention can be utilized to control the ignition timing of an engine used with a vehicle.

**Claims**

1. Ignition apparatus for an internal combustion engine, comprising

first means (3) for detecting a first angular reference position of the engine representing the minimum ignition advance angle,

second means (2) for detecting a second angular reference position representing the maximum ignition advance angle,

third means (20) for detecting a third angular reference position delayed from the second reference position by an angle indicative of an operating condition of the engine other than the engine speed,

a capacitor (7),

first circuit means (4, 5, 6) for charging the capacitor at a first predetermined rate during a first period and for discharging it at a second predetermined rate within a second period,

comparing means (10) for comparing the voltage on the capacitor with a first reference voltage (V1) and for generating an ignition timing signal when the capacitor voltage equals the first reference voltage during said second period,

second circuit means (6, 9) for rapidly discharging the capacitor at a third rate much higher than the second rate,

semiconductor switch means effecting excitation of the engine ignition coil when actuated by the ignition timing signal, the apparatus being characterised in that

the first circuit means (4, 5, 6) is arranged to restrict the first period to the period extending from the detection of the first reference position to the detection of the third reference position and the second period to the period extending from the detection of the third reference position to the time where the capacitor is rapidly discharged, and

the second circuit means (6, 9) is arranged to discharge the capacitor to a second reference voltage (V2) lower than the first reference voltage (V1) at the latest at the detection of the first reference position, but not earlier than at the generation of the ignition signal.

2. Ignition apparatus for an internal combustion engine, comprising

means (100) for detecting a first and a second angular reference position of the engine, which positions correspond to the minimum and to the maximum ignition advance angle, respectively, and for generating a first timing pulse signal in synchronism with the detection of said reference positions,

a capacitor (312),

first circuit means (301—311, 313) for charging the capacitor at a first predetermined rate during a first period extending from the detection of the first reference position to the detection of the ssecond reference position and for discharging the capacitor at a second predetermed rate during a second period terminating at the detection of the first reference position and starting at a time delayed with respect to the detection of the second reference position by a third period depending on an operating condition of the engine other than the engine speed,

second circuit means (40, 50, 60, 200, 301—311, 313) for defining the length of said third period as a function of said operating condition and for holding the capacitor voltage in this period,

comparing means (316) for comparing the voltage on the capacitor with a first reference voltage (V1) and for generating a second timing pulse signal when the capacitor voltage reaches the first reference voltage during said second period,

third circuit means (313—315) for rapidly discharging the capacitor at a third rate much higher than the second rate,

semiconductor switch means which when actuated effects the excitation of the engine ignition coil, the apparatus being characterised in that

the third circuit means (313—315) is arranged to discharge the capacitor to a second reference voltage (V2) lower than the first reference voltage (V1) at the latest at the detection of said first reference position but not earlier than at the generation of the second timing pulse signal,

the second circuit means (40, 50, 60, 200, 301—311, 313) comprises means (22) for generating a third timing pulse signal lasting throughout the third period,

the first, second and third timing pulse signals are applied to a logic circuit means (70) arranged to derive from said pulse signals an ignition signal actuating the semiconductor switch

(i) at the occurrence of the second timing pulse signal, or

(ii) at the detection of the first reference position if the second timing pulse signal does not occur owing to an engine speed below a first predetermined value, or

(iii) at the detection of the second reference position if the third timing pulse signal does not appear owing to an engine speed higher than a second predetermined value.

3. Ignition apparatus for an internal combustion engine, comprising

means for detecting a first and a second angular reference position of the engine, which positions correspond to the minimum and to the maximum ignition advance angle, respectively, and for generating a first timing pulse signal in synchronism with the detection of said reference positions,

a first capacitor (123),

first circuit means (113—122) for charging the first capacitor at a first predetermined rate during a first period extending from the detection of the first reference position to the detection of the second reference position and for discharging the first capacitor at a second predetermined rate during a second period terminating at the detection of the first reference position and starting at a time delayed with respect to the detection of the second reference position by a third period,

second circuit means (126, 127, 132—144) for defining the length of said third period and for holding the voltage of the first capacitor during this period, said second circuit means comprises a second capacitor (137) and a charging/discharging network (132—136) for charging the second capacitor at a third predetermined rate and for discharging the second capacitor at a fourth predetermined rate,

first comparing means (128) for comparing the voltage on the first capacitor with a first reference voltage (V1) and for generating a second timing pulse signal when the capacitor voltage reaches the first reference voltage during said second period,

third circuit means (124, 125) for rapidly discharging the first capacitor at a fifth predetermined rate much higher than the second rate,

semiconductor switch means which when actuated effects the excitation of the engine ignition coil, the apparatus being characterised in that

the charging/discharging network (132—136) is arranged to charge the second capacitor (137) during a fourth period extending from the detection of the second reference position to the detection of the first reference position and to discharge the second capacitor to a third reference voltage (V3) within a fifth period directly succeeding the fourth period and terminating before or at the detection of the second reference position,

the second circuit means (126, 127, 132—144) comprises second comparing means (127) for detecting when the voltages on the first and second capacitor (123, 137) are equal and means (132') arranged to generate a third timing pulse signal lasting from the detection of the second reference position to the detection of equality of the voltages on the first and second capacitor which timing pulse signal defines the third period,

the third circuit means (124, 125) is arranged to discharge the first capacitor to a second reference voltage (V2) lower than the first reference voltage (V1) at the latest at the detection of said first reference position but not earlier than at the generation of the second timing pulse signal,

the first, second and third timing pulse signals are applied to a logic circuit means (131) arranged to derive from said pulse signals an ignition signal actuating the semiconductor switch

(i) at the occurrence of the second timing pulse signal, or

(ii) at the detection of the first reference position if the second timing pulse signal does not appear owing to an engine speed below a first predetermined value, or

(iii) at the detection of the second reference position if the third timing pulse signal does not appear owing to an engine speed higher than a second predetermined value.

4. Ignition apparatus as claimed in claim 3 in which the third reference voltage (V3) is smaller than the first reference voltage (V1) and greater than the second reference voltage (V2).

5. Ignition apparatus as claimed in claim 3 in which the second and third reference voltages (V2, V3) are equal and are less than the first reference voltage (V1).

**Patentansprüche**

1. Zündvorrichtung für einen Verbrennungsmotor, umfassend

eine erste Einrichtung (3) zur Abtastung einer ersten Referenzwinkelstellung des Motors, die den minimalen Zündvoreilwinkel angibt,

eine zweite Einrichtung (2) zur Abtastung einer zweiten Referenzwinkelstellung, die den maximalen Zündvoreilwinkel angibt,

eine dritte Einrichtung (20) zur Abtastung einer dritten Referenzwinkelstellung, die gegenüber der zweiten Referenzwinkelstellung um einen Winkel verzögert ist, der einen anderen Betriebszustand des Motors als die Motordrehzahl angibt,

einen Kondensator (7),

eine erste Schaltungsanordnung (4, 5, 6), um den Kondensator mit einer ersten vorgegebenen Geschwindkeit während einer ersten Periode zu laden und um ihn mit einer zweiten vorgegebenen Geschwindigkeit in einer zweiten Periode zu entladen,

eine Vergleichseinrichtung (10) zum Vergleichen der Spannung am Kondensator mit einer ersten Referenzspannung (V1) und zum Erzeugen eines Zündzeitpunktsignals, wenn die Kondensatorspannung während der zweiten Periode gleich der ersten Referenzspannung ist,

**0 088 130**

eine zweiten Schaltungsanordnung (6, 9), um den Kondensator mit einer dritten Geschwindigkeit rasch zu entladen, die wesentlich höher ist als die zweite Geschwindkeit,

eine Halbleiter-Schalteinrichtung, die eine Erregung der Motorzündspule vornimmit, wenn sie durch das Zündzeitpunktsignal betätigt wird,

wobei die Vorrichtung dadurch gekennzeichnet ist, daß die erste Schaltungsanordnung (4, 5, 6) so ausgebildet ist, daß sie die erste Periode auf die Periode, die sich von der Abtastung der ersten Referenzstellung bis zur Abtastung der dritten Referenzstellung erstreckt, und die zweite Periode auf die Periode beschränkt, die sich von der Abtastung der dritten Referenzstellung bis zu dem Zeitpunkt erstreckt, wo der Kondensator rasch entladen wird,

und daß die zweite Schaltungsanordnung (6, 9) so ausgebildet ist, daß sie den Kondensator auf eine zweite Referenzspannung (V2), die niedriger ist als die erste Referenzspannung (V1), spätestens bei der Abtastung der ersten Referenzstellung, aber nicht eher als bei der Erzeugung des Zündsignals entlädt.

2. Zündvorrichtung für einen Verbrennungsmotor, umfassend

eine Einrichtung (100) zur Abtastung einer ersten und einer zweiten Referenzwinkelstellung des Motors, wobei die Stellungen dem minimalen bzw. dem maximalen Zündvoreilwinkel entsprechen, und zur Erzeugung eines ersten Zeitsteuerungsimpulssignals synchron mit der Abtastung der Referenzstellungen,

einen Kondensator (312),

eine erste Schaltungsanordnung (301—311, 313), um den Kondensator mit einer ersten vorgegebenen Geschwindigkeit während einer ersten Periode zu laden, die sich von der Abtastung der ersten Referenzstellung bis zur Abtastung der zweiten Referenzstellung erstreckt, und um den Kondensator mit einer zweiten vorgegebenen Geschwindigkeit während einer zweiten Periode zu entladen, die bei der Abtastung der ersten Referenzstellung endet und die zu einem Zeitpunkt beginnt, der bezüglich der Abtastung der zweiten Referenzstellung um eine dritte Periode vorzögert ist, die von einer anderen Betriebsbedingung als der Motordrehzahl des Motors abhängt,

eine zweite Schaltungsanordnung (40, 50, 60, 200, 301—311, 313), um die Länge der dritten Periode als Funktion der Betriebsbedingung zu definierten und um die Kondensatorspannung in dieser Periode zu halten,

eine Vergleichseinrichtung (316), um die Spannung am Kondensator mit einer ersten Referenzspannung (V1) zu vergleichen und um ein zweites Zeitsteuerungsimpulssignal zu erzeugen, wenn die Kondensatorspannung die erste Referenzspannung während der zweiten Periode erreicht,

eine dritte Schaltungsanordnung (313—315) zum raschen Entladen des Kondensators mit einer dritten Geschwindigkeit, die wesentlich höher ist als die zweite Geschwindigkeit,

eine Halbleiter-Schalteinrichtung, die dann, wenn sie betätigt ist, eine Erregung der Motorzündspule bewirkt,

wobei die Vorrichtung dadurch gekennzeichnet ist,

daß die dritte Schaltungsanordnung (313—315) so ausgebildet ist, daß sie den Kondensator auf eine zweite Referenzspannung (V2), die niedriger ist als die erste Referenzspannung (V1), spätestens bei der Abtastung der ersten Referenzstellung, aber nicht eher als bei der Erzeugung des zweiten Zeitsteuerungsimpulssignals entlädt,

daß die zweite Schaltungsanordnung (40, 50, 60, 200, 301—311, 313) eine Einrichtung (22) aufweist, um ein drittes Zeitsteuerungsimpulssignal zu erzeugen, das während der gesamten dritten Periode vorliegt,

und daß die ersten, zweiten und dritten Zeitsteuerungsimpulsignale an eine Logikschaltungsanordnung (70) angelegt werden, die so ausgelegt ist, daß sie aus den Impulssignalen ein Zündsignal ableitet, welches den Halbleiterschalter betätigt

(i) beim Auftreten des zweiten Zeitsteuerungsimpulssignals oder

(ii) bei der Abtastung der ersten Referenzstellung, wenn das zweite Zeitsteuerungsimpulssignal aufgrund einer Motordrehzahl unterhalb eines ersten vorgegebenen Wertes nicht auftritt, oder

(iii) bei der Abtastung der zweiten Referenzstellung, wenn das dritte Zeitsteuerungsimpulssignal aufgrund einer Motordrehzahl, die höher ist als ein zweiter vorgegebener Wert, nicht auftritt.

3. Zündvorrichtung für einen Verbrennungsmotor, umfassend

eine Einrichtung zur Abtastung einer ersten und einer zweiten Referenzwinkelstellung des Motors, wobei die Stellungen dem minimalen bzw. dem maximalen Zündvoreilwinkel entsprechen, und zur Erzeugung eines ersten Zeitsteuerungsimpulssignals synchron mit der Abtastung der Referenzstellungen,

einen ersten Kondensator (123),

eine erste Schaltungsanordnung (113—122), um den ersten Kondensator mit einer ersten vorgegebenen Geschwindigkeit während einer ersten Periode zu laden, die sich von der Abtastung der ersten Referenzstellung bis zur Abtastung der zweiten Referenzstellung erstreckt, und um den ersten Kondensator mit einer zweiten vorgegebenen Geschwindigkeit während einer zweiten Periode zu entladen, die bei der Abtastung der ersten Referenzstellung endet und die zu einem Zeitpunkt beginnt, der bezüglich der Abtastung der zweiten Referenzstellung um eine dritte Periode vorzögert ist,

eine zweite Schaltungsanordnung (126, 127, 132, 144), um die Länge der dritten Periode zu definieren und um die Spannung des ersten Kondensators während dieser Periode zu halten, wobei die zweite Schaltungsanordnung einen zweiten Kondensator (137) und eine Lade/Entladeschaltung (132—136) aufweist, um den zweiten Kondensator mit einer dritten vorgegebenen Geschwindigkeit zu laden und um

20

**0 088 130**

den zweiten Kondensator mit einer vierten vorgegebenen Geschwindigkeit zu entladen,

eine erste Vergleichseinrichtung (128), um die Spannung am ersten Kondensator mit einer ersten Referenzspannung (V1) zu vergleichen und um ein zweites Zeitsteuerungsimpulssignal zu erzeugen, wenn die Kondensatorspannung die erste Referenzspannung während der zweiten Periode erreicht,

eine dritte Schaltungsanordnung (124, 125), um den ersten Kondensator mit einer fünften vorgegebenen Geschwindigkeit zu entladen, die wesentlichen höher ist als die zweite Geschwindigkeit,

eine Halbleiter-Schaltungsanordnung, die dann, wenn sie betätigt wird, die Erregung der Motorzündspule bewirkt,

wobei die Vorrichtung dadurch gekennzeichnet ist, daß die Lade/Entladeschaltung (132—136) so ausgelegt ist,

daß sie den zweiten Kondensator (137) während einer vierten Periode lädt, die sich von der Abtastung der zweiten Referenzstellung bis zur Abtastung der ersten Referenzstellung erstreckt, und den zweiten Kondensator auf eine dritten Referenzspannung (V3) während einer fünften Periode entlädt, die direkt der vierten Periode vorausgeht und die vor oder bei der Abtastung der zweiten Referenzstellung endet,

daß die zweite Schaltungsanordnung (126, 127, 132—144) eine zweite Vergleichseinrichtung (127) zur Abtastung, wenn die Spannungen an den ersten und zweiten Kondensatoren (123, 137) gleich sind, und eine Einrichtung (132') aufweist, die so ausgelegt ist, daß sie ein drittes Zeitsteuerungsimpulssignal erzeugt, das von der Abtastung der zweiten Referenzstellung bis zur Abtastung der Gleichheit der Spannungen an den ersten und zweiten Kondensatoren andauert, wobei das Zeitsteuerungsimpulssignal die dritte Periode definiert,

daß die dritte Schaltungsanordnung (124, 125) so ausgelegt ist, daß sie den ersten Kondensator auf eine zweite Referenzspannung (V2), die niedriger ist als die erste Referenzspannung (V1), spätestens bei der Abtastung der ersten Referenzstellung, aber nicht eher als bei der Erzeugung des zweiten Zeitsteuerungsimpulssignals entlädt,

und daß die ersten, zweiten und dritten Zeitsteuerungsimpulssignale an eine Logikschaltungsanordnung (131) angelegt werden, die so ausgelegt ist, daß sie aus den Impulssignalen ein Zündsignal ableitet, welches den Halbleiterschaltung betätigt,

(i) beim Auftreten des zweiten Zeitsteuerungsimpulssignals oder

(ii) bei der Abtastung der ersten Referenzstellung, wenn das zweite Zeitsteuerungsimpulssignal aufgrund einer Motordrehzahl unterhalb eines ersten vorgegebenen Wertes nicht auftritt, oder

(iii) bei der Abtastung der zweiten Referenzstellung, wenn das dritte Zeitsteuerungsimpulssignal aufgrund einer Motordrehzahl, die höher ist als ein zweiter vorgegebener Wert, nicht auftritt.

4. Zündvorrichtung nach Anspruch 3, wobei die dritte Referenzspannung (V3) kleiner ist als die erste Referenzspannung (V1) und größer ist als die zweite Referenzspannung (V2).

5. Zündvorrichtung nach Anspruch 3, wobei die zweiten und dritten Referenzspannungen (V2, V3) gleich und kleiner sind als die erste Referenzspannung (V1).

**Revendications**

1. Dispositif d'allumage pour un moteur à combustion interne, comprenant:

un premier moyen (3) pour détecter une première position angulaire de référence du moteur représentant l'angle d'avance minimale à l'allumage,

un second moyen (2) pour détecter une seconde position angulaire de référence représentant l'angle d'avance maximale à l'allumage,

un troisième moyen (20) pour détecter une troisième position angulaire de référence retardée de la seconde position de référence d'un angle indiquant une condition de fonctionnement du moteur autre que la vitesse du moteur,

un condensateur (7),

un premier moyen formant circuit (4, 5, 6) pour charger le condensateur à une première allure prédéterminée pendant une première période et pour le décharger à une seconde allure prédéterminée pendant une seconde période,

un moyen de comparaison (10) pour comparer la tension au condensateur à une première tension de référence (V1) et pour produire un signal de réglage de l'allumage lorsque la tension au condensateur est égale à la première tension de référence pendant ladite seconde période,

un second moyen formant circuit (6, 9) pour décharger rapidement le condensateur à une troisième allure bien supérieure à la seconde allure,

un moyen formant commutateur à semiconductor effectuant l'excitation de la bobine d'allumage du moteur lorsqu'il est actionné par le signal de réglage de l'allumage, le dispositif étant caractérisé en ce que le premier moyen formant circuit (4, 5, 6) est agencé pour restreindre la première période à la période s'étendant de la détection de la première position de référence à la détection de la troisième position de référence et la seconde période à la période s'étendant de la détection de la troisième position de référence au moment où le condensateur est rapidement déchargé, et

le second moyen formant circuit (6, 9) est agencé pour décharger le condensateur à une seconde tension de référence (V2) plus faible que la première tension de référence (V1) au plus tard à la détection de la première position de référence, mais pas avant la production du signal d'allumage.

21

# 0 088 130

2. Dispositif d'allumage pour un moteur à combustion interne, comprenant

un moyen (100) pour détecter une première et une seconde position angulaire de référence du moteur, lesquelles positions correspondent à l'angle minimum et à l'angle maximum d'avance à l'allumage respectivement et pour produire un premier signal impulsionnel de réglage en synchronisme avec la détection desdites positions de référence,

un condensateur (312),

un premier moyen formant circuit (301—311, 313) pour charger le condensateur à une première allure prédéterminée pendant une première période s'étendant de la détection de la première position de référence à la détection de la seconde position de référence et pour décharger le condensateur à une seconde allure prédéterminée pendant une seconde période se terminant à la détection de la première position de référence et débutant en un temps retardé par rapport à la détection de la seconde position de référence d'une troisième période dépendant d'une condition de fonctionnement du moteur autre que la vitesse du moteur.

un second moyen formant circuit (40, 50, 60, 200, 301—311, 313) pour définir la longueur de ladite troisième période en fonction de ladite condition de fonctionnement et pour maintenir la tension au condensateur dans cette période,

un moyen de comparaison (316) pour comparer la tension au condensateur à une première tension de référence (V1) et produire un second signal impulsionnel de réglage lorsque la tension au condensateur atteint la première tension de référence pendant ladite seconde période,

un troisième moyen formant circuit (313—315) pour décharger rapidement le condensateur à une troisième allure bien supérieure à la seconde allure,

un moyen formant commutateur à semiconducteur qui, lorsqu'il est actionné, effectue l'excitation de la bobine d'allumage du moteur, le dispositif étant caractérisé en ce que

le troisième moyen formant circuit (313—315) est agencé pour décharger le condensateur à une seconde tension de référence (V2) plus faible que la première tension de référence (V1) au plus tard à la détection de ladite première position de référence mais pas avant la production du second signal impulsionnel de réglage,

le second moyen formant circuit (40, 50, 60, 200, 301—311, 313) comprend un moyen (22) pour produire un troisième signal impulsionnel de réglage durant toute la troisième période,

les premier, second et troisième signaux impulsionnels de réglage sont appliqués à un moyen formant circuit logique (70) agencé pour dériver, desdits signaux impulsionnels, un signal d'allumage actionnant le commutateur à semiconducteur,

(i) à la présence du second signal impulsionnel de réglage ou

(ii) à la détection de la première position de référence si le second signal impulsionnel de réglage ne se produit pas du fait d'une vitesse du moteur inférieure à une première valeur prédéterminée, ou

(iii) à la détection de la seconde position de référence si le troisième signal impulsionnel de réglage n'apparaît pas du fait d'une vitesse du moteur supérieure à une seconde valeur prédéterminée.

3. Dispositif d'allumage pour un moteur à combustion interne, comprenant

un moyen pour détecter une première et une seconde position angulaire de référence du moteur, lesquelles positions correspondant à l'angle minimum et à l'angle maximum d'avance à l'allumage, respectivement, et pour produire un premier signal impulsionnel de réglage en synchronisme avec la détection des positions de référence,

un premier condensateur (123),

un premier moyen formant circuit (113—122) pour charger le premier condensateur à une première allure prédéterminée pendant une première période s'étendant de la détection de la première position de référence à la détection de la seconde position de référence et pour décharger le premier condensateur à une seconde allure prédéterminée pendant une seconde période se terminant à la détection de la première position de référence et débutant en un temps retardé par rapport à la détection de la seconde position de référence, d'une troisième période,

un second moyen formant circuit (126, 127, 132—144) pour définir la longueur de ladite troisième période et pour maintenir la tension du premier condensateur pendant cette période, ledit second moyen formant circuit comprenant un second condensateur (137) et un réseau de charge/décharge (132—136) pour charger le second condensateur à une troisième allure prédéterminée et pour décharger le second condensateur à une quatrième allure prédéterminée,

un premier moyen de comparaison (128) pour comparer la tension au premier condensateur à une première tension de référence (V1) et pour produire un second signal impulsionnel de réglage lorsque la tension au condensateur atteint la première tension de référence pendant ladite seconde période,

un troisième moyen formant circuit (124, 125) pour décharger rapidement le premier condensateur à une cinquième allure prédéterminée bien supérieure à la seconde allure,

un moyen formant, commutateur à semiconducteur qui, lorsqu'il est actionné, effectue l'excitation de la bobine d'allumiage du moteur, le dispositif étant caractérisé en ce que

le réseau de charge/décharge (132—136) est agencé pour charger le second condensateur (137) pendant une quatrième période s'étendant de la détection de la seconde position de référence à la détection de la première position de référence et pour décharger le second condensateur à une troisième tension de référence (V3) pendant une cinquième période suivant directement la quatrième période et se

22

terminant avant ou à la détection de la seconde position de référence,

le second moyen formant circuit (126, 127, 132—144) comprend un second moyen de comparaison (127) pour détecter le moment où les tensions au premier et au second condensateur (123, 137) sont égales et un moyen (132') agencé pour produire un troisième signal impulsionnel de réglage durant de la détection de la seconde position de référence jusqu'à la détection d'égalité des tensions au premier et au second condensateur, lequel signal impulsionnel de réglage définit la troisième période,

le troisième moyen formant circuit (124, 125) est agencé pour décharger le premier condensateur à une seconde tension de référence (V2) plus faible que la première tension de référence (V1) au plus tard à la détection de la première position de référence mais pais avant la production du second signal impulsionnel de réglage,

les premier, second et troisièmes signaux impulsionnels de réglage sont appliqués à un moyen formant circuit logique (131) agencé pour dériver, desdits signaux impulsionnels, un signal d'allumage actionnant le commutateur à semiconducteur

(i) à la présence du second signal impulsionnel de réglage ou

(ii) à la détection de la première position de référence si le second signal impulsionnel de réglage n'apparaît pas du fait d'une vitesse du moteur en dessous d'une première valeur prédéterminée, ou

(iii) à la détection de la seconde position de référence si le troisième signal impulsionnel de réglage n'apparaît pas du fait d'une vitesse du moteur supérieure à une seconde valeur prédéterminée.

4. Dispositif d'allumage selon la revendication 3 où la troisième tension de référence (V3) est plus faible que la première tension de référence (V1) et plus importante que la seconde tension de référence (V2).

5. Dispositif d'allumage selon la revendication 3 où les seconde et troisième tensions de référence (V2, V3) sont égales et sont plus faibles que la première tension de référence (V1).

# FIG. 1

# FIG. 2

(a)

(b)

(c)

(d)

(e)

(f)

(g)

K2T

KIT

T

t

V1

V2

1

# FIG. 3

# FIG. 4

FIG. 5

FIG. 6

FIG. 7

# FIG. 8

ONE IGNITION
SPACING
(180°)

(a)

$a_1$  $a_2$

(b)

$\alpha_1°$

(c)

(d)  Id1  Ic1  V4

(e)

(f)

(g)

(h)  V2  VCC−VEC310

(i)  VCE311  V2

(j)  V2  $(VCC-VEC310-V2) \times \dfrac{R_{308}}{R_{308}+R_{307}} + V_{\frac{1}{2}}$

VOL4

(k)  V2  $(VCC-VEC310-V2) \times \dfrac{R_{308}}{R_{308}+R_{307}} + V_{\frac{1}{2}}$

(l)  Ic2  Id2  VP  V2  V1

(m)

(n)

(o)  VOLTAGE

(p)  IGNITION
ADVANCE
PULSE  ADVANCED
ANGLE θ°  TIME

7

# FIG. 9

# FIG. 10

FIG. 11

10

# FIG. 12

IGNITION ADVANCED ANGLE

MAXIMUM IGNITION ADVANCED POSITION

$\alpha°$

$\theta_1$   $\theta_2$

$0°$

MINIMUM IGNITION ADVANCED POSITION

NB  NE1          NE2

NUMBER OF ROTATIONS OF ENGINE (R.P.M)

N

# FIG. 13

IGNITION ADVANCED ANGLE

$\alpha°$

$\dfrac{C26}{C14} \cdot \dfrac{I1}{I3} (180° - \alpha°)$

$\theta'_1$

$0°$

$N'_B$   $N'_{E1}$

NUMBER OF ROTATIONS OF ENGINE (R.P.M)

N